(19)

Europäisches
Patentamt
European
Patent Office
Office européen
des brevets

(11) **EP 1 748 610 B1**

(12) **EUROPEAN PATENT SPECIFICATION**

(45) Date of publication and mention
of the grant of the patent:
**10.02.2010 Bulletin 2010/06**

(51) Int Cl.:
*H04L 25/02* (2006.01)     *H04L 27/26* (2006.01)

(21) Application number: **05016344.3**

(22) Date of filing: **27.07.2005**

(54) **Apparatus, method and computer program for estimating a channel for an OFDM transmission system**

Vorrichtung, Verfahren und Computerprogram zur iterativen Kanalschätzung für ein OFDM Übertragungssystem

Appareil, méthode et programme d'ordinateur pour estimer un canal pour un système de transmission OFDM

(84) Designated Contracting States:
**DE GB**

(43) Date of publication of application:
**31.01.2007 Bulletin 2007/05**

(73) Proprietor: **NTT DoCoMo, Inc.**
**Tokyo (JP)**

(72) Inventors:
• **Bonnet, Jéróme**
**80687 Munich (DE)**
• **Auer, Gunther**
**80339 Munich (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**US-A1- 2005 135 324**

• **WOOSEOK YANG ET AL: "An improved channel quality estimation technique for OFDM system" WIRELESS PERSONAL MULTIMEDIA COMMUNICATIONS, 2002. THE 5TH INTERNATIONAL SYMPOSIUM ON OCT. 27-30, 2002, PISCATAWAY, NJ, USA,IEEE, vol. 3, 27 October 2002 (2002-10-27), pages 1289-1292, XP010619301 ISBN: 0-7803-7442-8**
• **SANZI F ET AL: "A COMPARATIVE STUDY OF ITERATIVE CHANNEL ESTIMATORS FOR MOBILE OFDM SYSTEMS" IEEE TRANSACTIONS ON WIRELESS COMMUNICATIONS, IEEE SERVICE CENTER, PISCATAWAY, NJ, US, vol. 2, no. 5, September 2003 (2003-09), pages 849-859, XP001170631 ISSN: 1536-1276**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The present invention is generally related to an apparatus, method and computer program for estimating a channel for an OFDM Transmission System, in particular to an optimised iterative channel estimation technique.

In modern digital communications, the data to be transmitted over the fading channel is encoded before transmission and decoded at the receiver side in order to improve the transceiver performance. While pilot-aided channel estimation (PACE) techniques use pilot symbols known to the receiver in order to compute the channel estimates via interpolation, iterative channel estimation techniques utilize the available information on the coded bits to form estimates of transmitted symbols which are thereafter employed at the channel estimation (CE) stage to compute refined channel estimates. In the current state-of-the-art methods, however, the Wiener filter coefficients are calculated as if the data symbols used for the iterative channel estimation (ICE) stage were perfectly known to the receiver [1]. In [2], an evaluation of the noise, generated by soft symbol mapping, is shown. Otherwise, in [3], an optimized Wiener filter design taking into account an elaborate noise calculation is proposed. Nevertheless, the latter technique is not suited specially for OFDM-based transceivers which employ channel coding, i.e. for a BICM-OFDM system, as it cannot yield a sufficiently precise channel estimation for low signal to noise ratios.

In [4] a comparison of channel estimation algorithms for use in an iterative CDMA in a block fading algorithm is shown. A receiver consists of a soft multiuser data estimator, a bank of single user decoders and a multiuser channel estimator. The multiuser data estimator is implemented as parallel interference canceller with unconditional post-MMSE filtering and the decoder is a soft-in soft-out MAP decoder. In the channel estimator dedicated pilot symbols and fed back soft-code symbols are used, wherein the soft-code symbols are exploited as additional soft pilot symbols when the iterations proceed. The use of extrinsic information increases the receiver performance significantly compared to using a-posteriori information in the feedback for channel estimation. A linear MMSE (LMMSE) estimator takes into account the variances of fed back code symbols.

In [5], another channel estimation technique for iterative receivers is described.

In [6], the application of the concept of iterative reception with joint detection and decoding to multicarrier code division multiple access is shown. A multiuser detector is implemented as a parallel interference canceller with post-minimum mean squared error filtering. A pilot-based channel estimation scheme based on random time domain sequences is also shown.

Furthermore, [7] describes joint MAP (maximum a posteriori) equalization and channel estimation for frequency-selective and frequency-flat fast-fading channels. In [8] the comparison of a number of low complexity OFDM channel estimation techniques is shown. Further information regarding statistical aspects of signal processing can be found in [9]. [10] shows a method for channel estimation in OFDM systems with multiple transmit antennas by filtering in time and frequency. Methods for OFDM channel estimation by singular value decomposition are described in [11]. In the latter paper, low-rank channel estimators for orthogonal frequency division multiplexing (OFDM) systems using the frequency correlation of the channel are presented and analysed. Low-rank approximations based on the discrete Fourier transform suffer from poor performance when the channel is not sample spaced. The referenced paper shows that the theory of optimal rank-reduction can be applied to linear minimum mean squared error estimators.

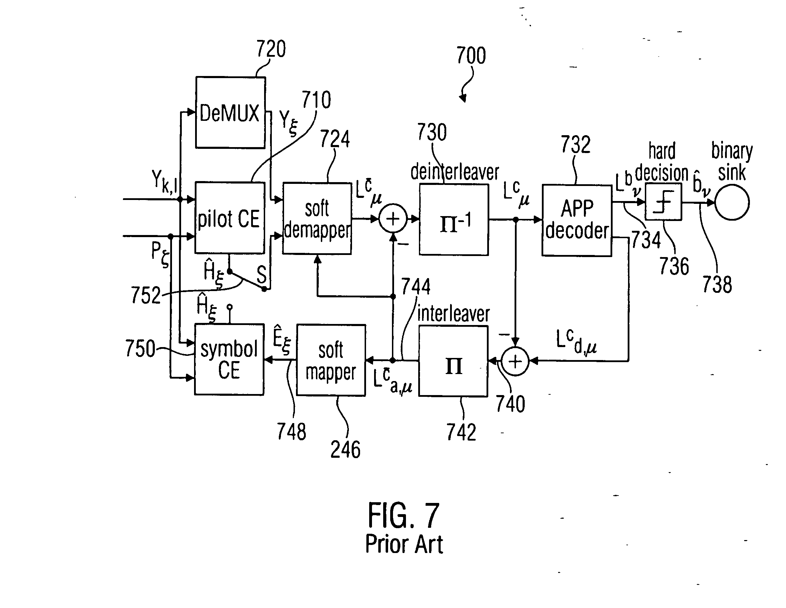

In the following, a conventional OFDM receiver for channel estimation with iterative filtering and decoding as disclosed in [1] will be described with reference to Fig. 7. The receiver of Fig. 7 is designated in its entirety with 700. Receiver 700 receives at its input QPSK constellation points $Y_{k,l}$ as well as pilot QPSK symbols $P_\zeta$. Receiver 700 comprises a pilot-based channel estimator (pilot CE) 710. After a first channel estimation step performed by the pilot-based channel estimator 710, a channel frequency response is known at the pilot positions. To allow for coherent detection, the receiver has to know the channel frequency response over the whole time-frequency grid. Therefore, the remaining values for the channel frequency response have to be interpolated based on the known values of the channel frequency response at the pilot positions.

The channel estimation is typically performed by cascading two one-dimensional FIR filters, one for the frequency direction and one for the time direction. Filtering is preferably performed first in the frequency direction, whereas the order of filtering (time or frequency first) for a rectangular pilot grid is arbitrary due to the linearity of the scheme. Accordingly, filtering in frequency direction can be performed using a number of nearest pilot positions to the actual position and filter coefficients which minimize an expectation value of the error (WIENER filter). The filter coefficients can be calculated using a minimum mean squared error algorithm. After the filtering in the frequency direction, estimates of the channel frequency response are available for a number of OFDM symbols. Subsequently, a filtering in the time direction can also be performed, so that as a result estimates of the channel frequency response are known over the whole time-frequency plane.

The receiver 700 further comprises a demultiplexer 720 which separates data symbols $Y_{k,1}$ from pilot symbols $P_\zeta$ and discards parts of the received signal, in which pilot symbols are present. A soft-demapper 724 receives the stream of symbols output by the demultiplexer 720 as well as channel estimates from the pilot-based channel estimator 710 at the position where data symbols are transmitted. The soft demapper 724 calculates log-likelihood ratios for incoming QPSK symbols. The log-likelihood ratios output by the soft demapper 724 are then fed into a deinterleaver 730. The output of the deinterleaver 730 is fed into an a-posteriori-probability algorithm 732. L-values 734 of the transmitted information bits are available at the output of the APP decoder 732. Based on the L-values 734, hard decisions can be made in a hard decision unit 734 to yield estimates 738 for the transmitted information bits. To allow for iterative decoding, extrinsic information 740 is fed back. After interleaving in an interleaver 742, the extrinsic information 740 becomes a-priori-knowledge 744, which is fed into the soft demapper 724 and soft mapper 746. The soft mapper 746 calculates mapped symbols 748 using probability functions. The mapped symbols 748 provided by the soft mapper 746 are then fed into a symbol-based channel estimation stage 750 (symbol CE). The symbol-based channel estimation stage further receives the QPSK constellation points $Y_{k,1}$ and the according pilot symbols $P_\zeta$. The symbol-based channel estimation stage 750 may compute an improved channel estimation over the whole time-frequency plane. In the symbol-based channel estimation stage 750, estimation can be achieved by cascading two one-dimensional FIR filters, one for the frequency direction and one for the time direction. Filter coefficients of the respective filters may be based on the mean minimum square error criterion with the assumption that perfect a-priori knowledge 744 is available at the input of the soft mapper.

When the symbol-based channel estimation stage 750 has computed an improved channel estimate, a switch 752 can be put into the lower position so that the improved channel estimate of the symbol-based channel estimation stage 750 is fed to the soft demapper 724. Subsequently, another iteration pass can be started.

Besides, it should be noted that other configurations can be used, for example an iterative a posteriori probability channel estimation, which is also shown in [1]. For an a-posteriori-probability estimation, a symbol-by-symbol maximum a posteriori algorithm can be applied to an appropriately chosen metric.

US 2005/0135324 A1 describes an apparatus for OFDMA transmission an reception for coherent detection in an uplink for a wireless communication system. In the resource mapping method for a data transmission, a time-frequency resource of a slot interval including OFDM symbols is divided into traffic channels and shared among subscribers. The traffic channel includes resource blocks uniformly distributed in whole transmit frequency band, and the resource block includes consecutive sub carriers of consecutive received symbols having at least one inserted pilot symbol. The pilot symbols and the channel-encoded and modulated data symbols are processed by time-frequency mapping according to the resource-block based mapping method to generate received symbols. The receiver separates the received symbols by subscribers according to the resource-block-based mapping method in a frequency domain, and performs iterative channel estimation, demodulation, and decoding by using the pilot and the data reference value after decoding for each traffic channel. A channel estimation in a channel estimation step further includes estimating a noise variance of each resource block by using channel estimates $\hat{h}_m(n, k)$, and tentatively decided modulation symbols $\hat{x}_d(n,k)$. The tentatively decided modulation symbols are calculated according to

$$\hat{x}(n,k) \;=\; \min_{x(n,k)} \sum_{m=1}^{M} \left| r_m(n,k) - \hat{h}_m(n,k)x(n,k) \right|^2 .$$

The noise variance is calculated according to

$$\sigma^2(\hat{n},k) \;=\; \frac{1}{|I_{RB}|M} \sum_{(n,k)\in I_{RB}} \sum_{m=1}^{M} \left| r_m(n,k) - \hat{h}_m(n,k)\hat{x}(n,k) \right|^2 ,$$

wherein $I_{RB}$ defines the range of time and frequency positions to be considered, M is a number of antennas for which an averaging is performed, and $r_m(n,k)$ is a received value.

Besides, the article "An improved channel quality estimation technique for OFDM system" of W. Yang et al. (published at the 5th International Symposium on Wireless and Personal Multimedia Communications, 2002, Piscataway, NJ, USA, IEEE, vol. 3, 27 October 2002) provides further background information about channel estimation techniques.

However, it has been shown, that the known iterative channel estimation algorithms provide a poor channel estimation when a signal-to-noise ratio (SNR) of a receive signal (or the incoming QPSK symbols $Y_{k,1}$) is small. Accordingly, for all the methods known so far, a sufficiently accurate channel estimation cannot be reached at data positions, as long as the bit error rate is too high to allow for a reliable detection of transmitted data symbols which are not a-priori known to the receiver (i.e. for non-pilot position data symbols).

Consequently, it is the object of the present invention to create a novel channel estimating concept which can yield a reliable channel estimate even if decoded data values provided by a decoder are prone to detection errors.

This objective is achieved by an apparatus for estimating a channel according to claim 1, a method for estimating a channel according to claim 19 and a computer program according to claim 20.

The present invention creates an apparatus for estimating a channel for an OFDM transmission system, comprising a receiver for receiving an OFDM symbol having pilot tones at certain pilot positions in the OFDM symbol, a channel values provider for estimating channel values at the pilot positions using the received OFDM symbol and knowledge on the pilot tones and for interpolating the channel values to obtain interpolated channel values at data positions different from the pilot positions, a decoder for decoding the OFDM symbols using the channel values at the data positions, to obtain decoded data values, a remapper for remapping the decoded data values into remapped data symbol estimates, and a channel estimator for estimating channel values at the data positions, using the remapped data symbol estimates to obtain improved channel values at the data positions. The channel estimator is operating to calculate the channel values at the data positions based on an equivalent noise value representing a noise energy which is higher than a noise energy of the thermal noise.

It is the key idea of the present invention to represent potential errors within the decoded data values, which are remapped to data symbol estimates and applied to a channel estimator, by an equivalent noise value representing a noise energy which is higher than the noise energy of the thermal noise. In other words, the impact of potential estimation errors of the decoded data values can be represented as a single parameter, the equivalent noise value, and the equivalent noise value can easily be applied in the channel estimator for estimating channel values at the data positions. Accordingly, the channel estimator can adapt to the errors and apply a filter function optimised for the actual error rate, including errors in the decoded data, when determining the channel estimate. In other words, the presence of errors within the decoded data values is reflected by using an equivalent noise value representing a noise energy which is higher than the noise energy of the symbol noise. So, estimation errors when generating decoded data values are modelled to be equivalent to additional thermal noise, which allows a computationally inexpensive consideration in the channel estimation.

The inventive concept therefore allows to determine a more reliable channel estimate in the presence of erroneously detected data values when compared to conventional channel detection techniques. Furthermore, the inventive apparatus for estimating a channel for an OFDM transmission system has a complexity which is similar to that of conventional channel estimating apparatus. However, the inventive apparatus is significantly superior to conventional techniques when the bit error rate for decoded data values is smaller than a certain threshold. The algorithm of the inventive channel estimator can be adjusted to consider bit errors in order to perform an accurate channel estimation based on the remapped data symbol estimates, while such adaptation is not present in conventional apparatus.

According to the present invention, a calculation of filter coefficients (for example minimum mean square error filter coefficients) performed in the channel estimator may take into consideration a symbol estimation error resulting from the decoding process. Therefore, the inventive channel estimator has shown to outperform existing state-of-the-art iterative channel estimation techniques. Besides, the inventive channel estimation concept can be employed with any modulation alphabet, i.e. with any PSK or QAM constellation, and with any channel encoder, so that the proposed scheme is suited for a broad range of BICM-OFDM systems.

The inventive channel estimation concept takes maximal benefit of the available information on the transmitted signal at the receiver side by translating an estimated bit error rate into an equivalent noise value, which is then used for a channel estimation. The equivalent noise value can be considered to represent an effective signal-to-noise ratio estimate, which can be used to adapt the channel estimator to provide a reliable channel estimate.

In another preferred embodiment, the channel estimator is operating to calculate the channel values at the data positions using a ratio between the equivalent noise energy, which is higher than the noise energy of the symbol noise, and an energy measure of remapped data symbol estimates. The consideration of the energy of the remapped data symbol estimates results in an even more accurate estimate of an effective signal-to-noise ratio for adapting the channel estimator to the incoming signal. Using the calculated energy measure of the remapped data symbol estimates rather than an assumed (ideal) energy value of the estimated data symbols produces a much more reliable signal-to-noise ratio value. This is particularly true, if the amplitudes of different OFDM carriers have different amplitudes (for example when using a QAM modulation). Also, with increasing bit error rate, the amplitudes of the remapped data symbol estimates deviate more and more from assumed ideal values, as decoding uncertainties tend to change the amplitudes of the remapped data symbol estimates.

Furthermore, it is preferred to choose the equivalent noise value to represent a noise energy lower than five times the noise energy of the thermal noise. It has been found out, that for excessively high equivalent noise values, the channel estimator can no longer produce reliable channel estimates, because the uncertainty is getting too big and the channel estimator can not make use of the information contained in the received OFDM symbols. So, the equivalent noise value may preferably be restricted to represent no more than about five times (or, in another embodiment, about three times) the noise energy of the thermal noise, even if a higher equivalent noise energy would be justified due to high error rates in data value decoding. Consequently, a limitation of the equivalent noise value can help to achieve reliable channel estimates even if the error rate of the decoded data values is very high.

Besides, it is preferred, that the equivalent noise value takes into consideration symbol errors and/or bit errors resulting from decoding errors when extracting decoded data values from the OFDM symbols. In other words, the equivalent noise value is preferably calculated as a function of an estimate of a decoding error rate. In this way, the equivalent noise value can be adapted to the error rate of decoded data values and/or remapped data symbol estimates. As a consequence, the reliability of the remapped data symbol estimates can be considered in the channel estimation procedure.

It should further be noted that the decoded data values can be soft symbols comprising probability information about the likelihood of a plurality of different data values. Accordingly, detection uncertainties (indicating potential detection errors) for the soft symbols can be numerically expressed, and the equivalent noise value can be calculated based on the soft symbol estimation uncertainty. The inventive apparatus consequently allows the channel estimation to take into consideration non-perfect soft symbol decoding or estimation.

The channel estimator for estimating the channel values is preferably adapted to calculate the channel values at the data positions by applying a linear filter operation to received OFDM symbols, wherein the linear filter operation is described by a product of a channel-receive-signal cross-correlation matrix and an inverse of a receive-signal auto-correlation matrix. Diagonal elements of the receive-signal auto-correlation matrix are dependent on the equivalent noise value. In other words, the estimation error described by the equivalent noise value is incorporated into the receive-signal auto-correlation-matrix used for the determination of filter coefficients for the channel estimation. An optimal filter can be achieved, if stochastic uncertainties (with stochastic characteristics equivalent to thermal noise) are considered in the calculation of the filter parameters. Further, it was found out, that optimal an efficient estimation of channel values can be achieved by applying a linear filter operation to received OFDM symbols, wherein the linear filter operation is described by a product of matrices.

Furthermore, it is preferred that the inventive apparatus comprises an equivalent noise calculator for calculating the equivalent noise value as a sum of a thermal noise value and an average of a number of symbol noise values, the symbol noise values describing an error introduced by an erroneous decoding of the OFDM symbols. Accordingly, the equivalent noise value is a superposition of the thermal noise and symbol uncertainties. The symbol noise values can, for example, be derived from an output of the decoding stage, wherein the decoding stage is preferably adapted to estimate the reliability of the decoded data values. Also, an averaging of the symbol noise values is advantageous, as symbol error values are of a stochastic nature. The averaging also reduces the computational effort, as an average symbol noise value may be attributed to several symbols under consideration. This facilitates any mathematical operations, as the average noise can be expressed by a matrix which is proportional to a diagonal matrix. Describing noise in such a form facilitates a required matrix inversion. Also, the average symbol noise values apply in the same way to a plurality of symbols under consideration, just like thermal noise. Consequently, the averaged symbol noise values can be treated in the same way as the symbol noise, and a joint processing of thermal noise and averaged symbol noise is possible. This allows a particularly efficient implementation of the inventive channel estimating apparatus.

It is further preferred that the inventive apparatus comprises a symbol noise value calculator for calculating symbol variances based on symbol probabilities provided by the decoder, and for calculating the symbol noise values based on the symbol variances. The symbol variances are values which allow an estimation of the symbol error probabilities, and are therefore well suited for the calculation of the equivalent noise value. The decoder preferably provides probability information, e.g. an information about the likelihood of a number of different symbols. The variance of the symbol probabilities can be extracted and can be used for the calculation of a symbol noise value.

Also, the symbol noise value calculator can be designed to consider the OFDM symbols in pilot positions when determining the symbol variances and the average of the symbol noise values. In other words, for pilot symbols the symbol noise values are not derived from decoded data values. In contrast, a zero symbol noise value is assumed for the symbols at pilot positions considering the perfect reliability of the pilot symbols. Such a calculation of the equivalent noise value ensures that always the most accurate information about the symbols is used.

Furthermore, it is preferred, that the symbol noise calculator is adapted to calculate symbol noise values as products of the symbol variances and corresponding channel transfer power values, wherein the channel transfer power values describe magnitudes of the channel transfer function relevant for transmission of the modulation symbol for which the symbol noise value is calculated. In other words, the symbol noise value (based on the symbol variance) for data values or symbols is weighted by a corresponding channel transfer characteristic. Accordingly, for the calculation if the equivalent noise value the contributions of symbols arriving with a very low symbol energy are scaled down in comparison to symbols arriving with a high symbol energy equivalent to a large magnitude of the channel transfer function (and the channel transfer power value). The respective scaling prevents, that symbols having a large symbol variance but a small signal strength degrade the equivalent noise value. It was found out, that for channel estimation received data symbols with a high power, i.e. symbols for which the corresponding channel transfer function has a large magnitude (reflected by a large channel transfer power value), have the strongest impact on the estimated channel transfer characteristic. In contrast, symbols which are received with smaller power only do not influence the estimated channel transfer characteristic so strongly. Therefore, a large symbol variance of a symbol having a low energy (corresponding to a small magnitude of the channel transfer power value for the symbol) will not have a strong negative impact on the channel estimate. Therefore, it is advantageous to scale the symbol variances with the corresponding channel transfer power values to yield a meaningful equivalent noise value.

The inventive apparatus preferably further comprises a channel transfer power value calculator for calculating a channel transfer power value for a symbol. The channel transfer power value calculator may be designed to evaluate a quotient of a received symbol power and a transmitted symbol power to yield a channel transfer power value. The received symbol power may be calculated by subtracting a thermal noise power from a received signal power for an OFDM symbol. In other words, it is typically possible to estimate a channel transfer power value (but not a channel transfer phase value) by knowing the received signal power for an OFDM symbol. Accordingly, using a relatively simple system, the channel transfer power values can be calculated to achieve the scaling of the symbol noise values described above.

In another preferred embodiment, the channel estimator is adapted to calculate the channel values at the data positions based on an effective signal-to-noise ratio, which is determined considering erroneous OFDM symbol decoding by the decoder, and which is lower than a theoretical signal-to-noise value, wherein the theoretical signal-to-noise value is defined as a ratio of a symbol energy and a thermal noise power. Also, preferably the effective signal-to-noise ratio is smaller than a soft-symbol signal-to-noise ratio, wherein the soft-symbol signal-to-noise ratio is defined as a quotient between an expectation value of power values (e.g. squared amplitudes) of soft-symbols (e.g. estimated data symbols) provided by the decoder and the thermal noise power. Preferably, the channel estimator is adapted to calculate the effective signal-to-noise ratio as a quotient between an expectation value of squared amplitudes of data symbol estimates (e.g. power values of soft symbols) provided by the decoder and the equivalent noise value. It should be noted, that a signal-to-noise ratio or an effective signal-to-noise ratio can be processed by a channel estimator and is a relevant piece of information required for typical signal-adaptive filtering and channel estimation.

The inventive apparatus may also preferably comprise an averager for averaging equivalent noise values over a plurality of data positions to obtain an average equivalent noise value. In this case, the channel estimator is preferably adapted to calculate the channel values at a plurality of data positions using the averaged equivalent noise value. It was found out, that it is not necessary to calculate individual equivalent noise values for the estimation of different channel values. In contrast, it has been found that the equivalent noise value is varying slowly over time and frequency. Therefore, the calculation of multiple channel values using a single averaged equivalent noise value results in an improved computational efficiency when compared to recalculating the equivalent noise values for every individual channel estimation step (i.e. for every frequency and for every point in time under consideration). Even with the described averaging, a very accurate calculation of the channel values is possible. In particular, reusing the averaged equivalent noise value avoids the need for a continuous repetition of a matrix inversion, which is typically performed in a channel estimator based on the (equivalent) noise value. So, averaging the equivalent noise values are remarkable reduction in energy consumption and/or computational complexity can be achieved.

Also, it was found, that an averaging over one OFDM frame is particularly advantageous, as the size of an OFDM frame is typically chosen to be such that the average noise values do not vary strongly over the duration of the OFDM frame. Also, between two OFDM frames there is typically a cyclic prefix (CP) interval, during which no new OFDM symbols are achieved. In other words, during the cyclic prefix interval the computations necessary to calculate the (average) equivalent noise value can be performed using resources (for example hardware resources, electric power, or other resources) which are required for OFDM symbol detection during an OFDM frame. In other words, it is preferred that the equivalent noise value is refreshed and that the necessary matrix calculations are done in the cyclic prefix interval between two adjacent OFDM frames.

Furthermore, it is preferred that the channel estimator is adapted to calculate the channel values by performing a first linear filter operation of the received OFDM symbols in a first direction to obtain one-time filtered values, and a second linear filter operation of the one-time filtered values to obtain the channel values over a region extended in time and frequency. The first direction may be a frequency direction, and the a second direction may be a time direction, or vice-versa. The filtering in two directions allows the calculation of channel values over both time and frequency. The equivalent noise value, or a quantity derived from the equivalent noise value, may be applied to both filter operations. Consequently, the incorporation of the equivalent noise value can improve the accuracy of both filter operations.

However, when cascading two filter operations a signal-to-noise ratio visible to the second filter is improved thanks to the first filtering. Accordingly, the equivalent noise value is preferably scaled to the filter orders M1 and M2 of the first filter operation and the second filter operation respectively. Accordingly, it is preferred that for the first filter operation a first partial noise power value $N_1 = \dfrac{\sigma_{N'}^2}{\alpha}$ is used, and that for a second filtering a second partial noise power value $N_2 = \dfrac{\sigma_{N'}^{2}}{\beta}$ is used. $\alpha$ and $\beta$ are preferably both chosen to be greater than or equal to 1. Furthermore, it is preferred, that $0.5\sqrt{(M1+M2)/2} \le \alpha, \beta \le 2\sqrt{(M1+M2)/2}$. The described relation is used to adapt the equivalent noise value to the order of the filters, so that a reduction of the equivalent noise value due to a higher order filtering can be considered. It is further preferred, that $\alpha$ and $\beta$ are identical, so that $\beta = \sqrt{(M1+M2)/2}$.

An identical distribution of the correction factors $\alpha$ and $\beta$ to both linear filter operations has been found to bring very good results and further reduces complexity of the calculation.

The present invention further creates a method for estimating a channel for an OFDM transmission system. Advantages of the inventive method are analogous to advantages of the inventive apparatus and are therefore not discussed separately. The same applies to the respective computer program.

Preferred embodiments of the present invention will subsequently be described in detail with reference to the following Figures, in which:

Fig. 1A shows a block diagram of an inventive channel estimator according to a first embodiment of the present invention;

Fig. 1B shows a block diagram of an inventive channel estimator according to a second embodiment of the present invention;

Fig. 2A shows a graphical representation of a first channel estimate via interpolation in frequency and time direction;

Fig. 2B shows a block diagram of a receiver calculating a first channel estimate via interpolation;

Fig. 3 shows a graphical representation of an iterative channel estimate based on soft symbol estimates and pilot symbols;

Fig. 4 shows a block diagram of a receiver calculating an improved channel estimate based on pilot tones and symbol estimates;

Fig. 5 shows a graphical representation describing performance of several channel estimation concepts in terms of mean squared error as a function of signal-to-noise ratio;

Fig. 6 shows a graphical representation describing performance of several channel estimation concepts in terms of bit error rate as a function of signal-to-noise ratio; and

Fig. 7 shows a block diagram of a prior art channel estimator.

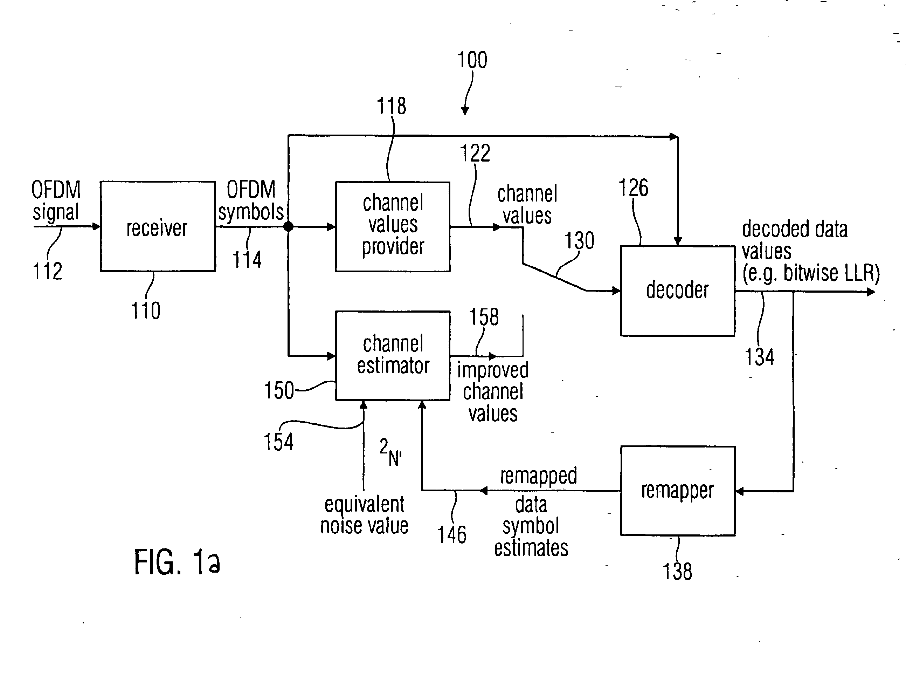

Fig. 1A shows a block diagram of an inventive channel estimator according to a first embodiment of the present invention. The inventive channel estimator of Fig. 1A is designated in its entirety with 100. The inventive channel estimator 100 comprises a receiver 110 receiving an OFDM signal 112. The receiver 110 further derives OFDM symbols 114 from the OFDM signal 112. The OFDM symbols 114 typically have pilot tones at certain pilot positions within the OFDM symbol.

The OFDM symbols 114 are fed into a channel values provider 118 which is adapted for estimating channel values at the pilot positions within the received OFDM symbols 114 using knowledge on the pilot tones. In other words, the channel values provider 118 may be adapted to evaluate the OFDM symbols at the pilot positions based on highly reliable knowledge about pilot symbols sent by a transmitter at the pilot positions. Furthermore, the channel values provider 118 is preferably configured for interpolating the channel values at the pilot positions to obtain interpolated channel values at data positions different from the pilot positions. For this purpose, the channel provider 118 may use a linear filter to which OFDM symbols 114 are fed. Coefficients of the filter may be adapted according to a minimum means squared error criterion.

Channel values 122 provided by the channel values provider 118 are fed into a decoder 126 over a switch 130. The decoder 126 further receives the OFDM symbols 114 from the receiver 110, and is designed to generate decoded data values 134 at its output. The decoder may comprise any means for generating decoded data values 134 on the basis of the channel values 122 and the OFDM symbols 114. For example, the decoder may comprise a demapper (e.g. a soft demapper), a deinterleaver and/or a channel decoder (e.g. an a posteriori probability decoder). The decoded data values 134 may be hard or soft data values and are input into a remapper 138.

The remapper 138 generates remapped data symbol estimates 146, which are fed into a channel estimator 150. The channel estimator 150 further receives the OFDM symbols 114 and an equivalent noise value $\sigma_N^2$ 154. The channel estimator 150 is adapted to estimate channel values at the data positions using the remapped data symbol estimates 146 to obtain improved channel values 158 at the data positions. For this purpose, the channel estimator 150 uses an equivalent noise value 154, wherein the equivalent noise value represents a noise energy which is higher than the noise energy of thermal noise.

When the channel estimator 150 has calculated improved channel values 158, the improved channel values 158 may be fed to the decoder 126 by appropriately switching the switch 130.

Based on the above structural description, the operation of the inventive channel estimator 100 will subsequently be described in detail.

In a first step, channel values provider 118 calculates channel values 122 based on the OFDM symbols 114, wherein channel values provider 118 uses knowledge on the position and symbol content of pilot symbols. Channel values provider 118 first calculates channel values at the positions of the pilot symbols, and then performs interpolation to yield channel values at positions of data symbols in the stream of OFDM symbols 114. However, the estimated channel values 122 provided by the channel values provider 118 have limited accuracy, as channel values provider 118 only knows data values at the pilot positions, so that the extensive interpolation has to be applied, whereby remarkable inaccuracy is introduced into the first estimate of the channel values.

The channel values 122 provided by the channel values provider 118 are then fed into a decoder 126, which can generate decoded data values 134 based on the OFDM symbols 114 and the channel values 122. Although the decoder 126 may perform channel decoding in order to reduce the symbol error rate or bit error rate of the decoded data values, the decoded data values still comprise a finite error rate due to noise and distortions. Furthermore, errors of the decoded data values 134 may also be caused by inaccurate channel estimates provided by the channel values provider 118.

The decoded data values having a finite error rate are then remapped in the remapper 138 to form remapped data symbol estimates 146. The remapped data symbol estimates 146 may be complex values defining an estimate of an OFDM symbol sent by an OFDM sender. The remapped data symbol estimates 146 are used by the channel estimator 150 as an a priori knowledge in order to calculate an improved channel estimate at the data positions. For this purpose, the channel estimator must consider a thermal noise which is superposed to the received OFDM symbols. However, further fluctuations or errors arise due to errors included in the remapped data symbol estimates 146. Such errors originate from a non-ideal decoding of the received OFDM symbols, so that the assumed a priori knowledge for calculating the improved channel estimate is not perfect.

Accordingly, the channel estimator is adapted to use an equivalent noise value 154, which represents a noise energy that is higher than a noise energy of the thermal noise. The difference between the equivalent noise value and the thermal noise therefore describes errors of the remapped data symbol estimates 146. Accordingly, the channel estimator 150 can apply the equivalent noise value as a realistic estimate of noise and fluctuations when deriving the improved channel values 158 from the OFDM symbols 114.

The usage of such realistic error measure is important, as the channel estimator typically uses a filter which is adapted to provide improved channel values 158 according to a minimum mean squared error criterion. However, the filter can only be appropriately adapted if the total error of the values input to the channel estimator is known. A realistic description of the total errors can be given using the equivalent noise value, which is chosen to represent a noise energy which is bigger than the thermal noise energy in order to include errors in the decoded data values or the remapped data symbol estimates.

When the channel estimator 150 can provide improved channel values 158 based on the received OFDM symbols, the equivalent noise value and the remapped data symbol estimates, these improved channel values 158 can be fed into the decoder 126 by changing the position of the switch 130. The decoder 126 can then optionally provide improved decoded data values 134 to the channel estimator based on the OFDM symbols and the improved channel values 158. In this way, the channel values 158 and the data values can be improved iteratively, if necessary.

Accordingly, the key idea of the present invention is to consider errors of the decoded data values 134 by applying an equivalent noise value 154 to the channel estimator 150, wherein the equivalent noise value represents a noise energy which is larger than a noise energy of the thermal noise.

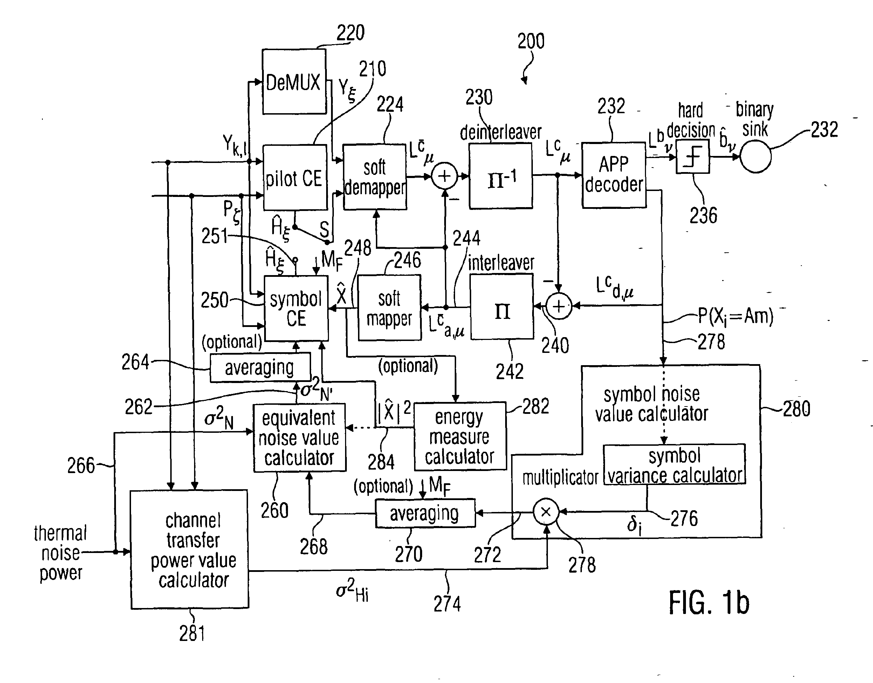

Fig. 1b shows a block diagram of an inventive channel estimator according to a second embodiment of the present invention. The channel estimator of Fig. 1b is designated in its entirety with 200. It should be noted here, that the channel estimator 200 is similar to the channel estimator 700 described before with reference to Fig. 7. Accordingly, like means are designated with reference numerals which differ only in the first digit and which are identical in the last two digits. Therefore, a detailed description of the means already known from the channel estimator 700 of Fig. 7 will be omitted here. In contrast, focus will be put on the inventive components added to the prior art channel estimator 700.

The key component of the inventive channel estimator 200 is an equivalent noise calculator 260. The equivalent noise calculator 260 is coupled with the symbol based channel estimator 250 and provides to the symbol based channel estimator 250 an equivalent noise value $\sigma_{N'}^2$ 262. The equivalent noise calculator 260 may provide to the symbol based channel estimator 250 equivalent noise values 262 for every individual symbol position to be processed by the symbol based channel estimator 250. Furthermore, an averaging unit 264 may optionally be applied to the equivalent noise values 262 provided by the equivalent noise value calculator 260. The averaging may result in average equivalent noise values, which may be used by the symbol based channel estimator 250 for estimating channel values for more and one symbol position.

The equivalent noise value calculator 260 receives, calculates or otherwise determines a thermal noise power 266. The thermal noise power may also be stored within the equivalent noise calculator 260 or another storing means. The equivalent noise calculator 260 further receives an additional noise value 268, which describes an additional error introduced by an erroneous decoding of the OFDM symbols (in the softmapper 224, the deinterleaver 230 and/or the a posteriori probability decoder 232). The equivalent noise value calculator is typically configured to add the thermal noise value 266 and the additional noise value 268.

The additional noise value 268 is determined by an averaging unit 270 based on symbol noise values 272. The symbol noise values describe an error introduced by an erroneous decoding of an individual OFDM symbol. The averaging may be performed over a number of $M_F$ symbol noise values 272 in the averaging unit 270. The number $M_F$ describing the number of symbol noise values 272 to be included into an averaging may be identical to an order of a filtering operation applied in the symbol based channel estimator 250.

The symbol noise value may be derived by the multiplication of channel transfer power values $\sigma_{Hi}^2$ and symbol variances $\delta_i$ 276 in a multiplier 278. In other words, the symbol variances 276 may be weighted with the channel transfer power values 276 which describe the magnitude of the channel transfer function for the respective symbol. The symbol variances 276 can be calculated based on symbol probabilities 278 provided for example by the a posteriori probability decoder 232. For this purpose, a symbol noise value calculator 280 may be applied.

The channel transfer power values 274 may be calculated in a channel transfer power value calculator 281 by subtracting a thermal noise power 266 from a power of an incoming data symbol $Y_{k,1}$ and dividing the difference by a symbol energy.

Furthermore, an energy measure calculator 282 may be used to calculate energy measures of remapped data symbol estimates 248. The energy measures are designated with 284, and may be fed to the symbol based channel estimator 250 and/or to the equivalent noise value calculator 260 (e.g. for calculating an effective signal-to-noise ratio).

Based on the structural description of the inventive channel estimator, the function of the channel estimator will be described in more detail below. The inventive channel estimator is designed to provide an equivalent noise value to the symbol based channel estimator 250. The equivalent noise value is achieved by summing up a thermal noise value 266 and the additional noise value 268, which describes the risk of erroneous decoding of OFDM symbols in terms of a statistic noise value. In other words, decision errors are assumed to have a similar effect on the symbol based channel estimation 250 as additional (thermal) noise.

However, the additional noise values 268 are preferably calculated by weighting symbol variances 276 with a channel power transfer function calculated in the channel transfer power value calculator. Accordingly, symbols which are received weakly (i.e. with small symbol power) are weighted less than symbols which are received more strongly when calculating the symbol noise values. This is due to the fact that OFDM symbols received with high symbol energy have a stronger impact on the symbol based channel estimator 250 than OFDM symbols received with low symbol energy.

Averaging 270 can optionally be applied to the symbol noise values 272 in order to facilitate the further calculation process. However, averaging 270 (as well as averaging 264) is not a necessary feature, as indeed symbol noise values 272 for each individual symbol may also be applied by the symbol based channel estimator 250.

It should further be noted that it is not necessary to separate the pilot based channel estimator 210 and the symbol based channel estimator 250. In contrast, both the pilot based channel estimators 210 and the symbol based channel estimator 250 may be implemented in the same hardware, and may be reconfigured to perform either pilot based channel estimation or symbol based channel estimation.

Also, the deinterleaver 230 and the interleaver 242 are optional and may not be necessary if interleaving and/or deinterleaving is not included in a communication system in combination with which the inventive apparatus is to be used. Also, the a posteriori probability decoder 232 can be replaced by any known channel decoder. However, it is advantageous that from the output of the decoder 232 a symbol noise value carrying an information about a reliability of the decoded symbols can be extracted. For this purpose, log-likelihood ratios may be used. Alternatively, any other reliability measure known for stochastic quantities can also be evaluated.

The energy measure 284 may be calculated for the remapped data symbol estimates 248 (e.g. by calculating an expectation value of squared amplitudes of the data symbol estimates) and may be used in the symbol based channel estimator 250. The energy measure 284 may also be fed into the equivalent noise value calculator 260. However, the calculation of an energy measure is optional and may be omitted if the energy of the remapped data symbol estimates 248 only comprises minor fluctuations, which may be neglected.

Furthermore, it should be noted, that the equivalent noise value calculator 260 may provide to the symbol based channel estimator 250 a noise value 262 describing an equivalent noise power or an equivalent signal-to-noise ratio (SNR). Both types of information (i.e. an effective noise value or an effective signal-to-noise ratio) may be used alone or in combination by the symbols based channel estimator 250 depending on the details of the particular used symbol based channel estimator 250.

Furthermore, it may not be necessary to calculate the channel transfer power values provided the channel transfer power values are assumed to be constant over a certain frequency range or a certain period in time. Averaging may be applied when calculating the channel transfer power values. Further, it may be assumed under certain circumstances, that the channel transfer power values are constant and known a priori. In this case, the multiplier 270 may be omitted, or may perform a fixed scaling of the symbol variances.

In the following, the inventive concept will be described in more detail.

The purpose of the inventive optimized iterative channel estimation technique for OFDM systems is to derive an improved linear MMSE channel estimator, specifically suited for ICE. The calculation of the MMSE filter coefficients takes into consideration the symbol estimation error resulting from the soft mapping operation. The new channel estimator is shown to outperform existing, state-of-the-art, iterative channel estimation (ICE) techniques. Furthermore, the proposed ICE technique can be employed with any modulation alphabet, i.e. with any PSK (phase shift keying) or quadrature amplitude modulation (QAM) constellation, and with any channel encoder so that the proposed scheme is suited for a broad range of bit interleaved code modulation-orthogonal frequency division multiplexing (BICM-OFDM) systems.

In the following, advantages of the present invention will be outlined.

The inventive new iterative channel estimation method proposed above takes a maximal benefit of the available information on the transmitted signal at the receiver side. In addition to the soft mapping operation, the new algorithm uses the soft bit-wise information from the channel decoder to estimate the noise induced by the soft symbol estimation. The resulting actual SNR estimate serves to optimize the Wiener filter design used for channel estimation. If the effective noise is averaged out over the entire OFDM frame or over a smallest time-frequency bin, then the detection complexity is not noticeably enhanced. Indeed, the proposed scheme requires only an additional calculation of the effective noise power after each turbo iteration. Therefore, this optimized method may be employed for the receiver designs of future wireless communication systems, and proposed within the framework of the European IST Project WINNER for instance.

In the following, the present invention will be described in detail.

Firstly, an overview will be given on iterative Filtering and decoding.

In this chapter, we address iterative channel estimators where the first estimate is obtained with the help of pilot symbols multiplexed into the transmitted data stream. In this so-called separated approach, channel estimation and soft demapping are performed separately. Note that other iterative channel estimation techniques perform joint channel estimation and detection (see [7]) but this approach is computationally expensive, and thus is not covered by the present report.

Initial FIR filtering may be the first step of the inventive concept, and will therefore described here in some detail.

After cyclic prefix (CP) removal and FFT transformation of the received symbol, the received symbol at the $n^{th}$ OFDM subcarrier $(0 \leq n \leq N_c)$ from the $k^{th}$ OFDM symbol $(0 \leq k \leq K)$ reads

$$Y_{k,n} = H_{k,n} \cdot X_{k,n} + N_{k,n} \quad (1)$$

In this transmission scenario, we assume that channel estimation is performed for a given OFDM frame, which consists of K successive OFDM symbols. Each OFDM symbol contains furthermore $N_c$ subcarriers. The most commonly used methods to reconstruct the whole Channel Transfer Function (CTF) at the receiver are the so-called PACE techniques. PACE utilizes a subset of perfectly known data symbols (pilots) $\tilde{X}_{i,j}$ through interpolation and Wiener filtering. This initial estimate is derived as in [8] and is reminded here: if the interpolation is done in the frequency direction, i.e. across the OFDM tones, the channel estimate at the $n^{th}$ subcarrier and the $k^{th}$ OFDM symbol is determined by:

$$\hat{H}_{k,n} = c_n^T \cdot \tilde{h}_n \quad (2)$$

where the vector $\tilde{h}_n = \left[ \tilde{H}_{k,p(1)}, \ldots, \tilde{H}_{k,p(M_f)} \right]^T$ contains the channel estimates at pilot symbol positions, i.e.

$\tilde{H}_{k,p(m)} = Y_{k,p(m)} \cdot \tilde{X}_{k,p(m)}^{-1}$. The subscripts $p(m)$ refer to the indices of the $M_f$ closest pilot symbols to the desired position $n$, given that the filter order is $M_f$.

In (2), the filter coefficients contained in $c_n$ are computed by solving the Wiener-Hopf equations:

$$c_n = \left(R_{\bar{H}\,\bar{H}} + \left(\sigma_N^2 / E_p\right) \cdot I\right)^{-1} \cdot r_{H\,\tilde{H},n} \qquad (3)$$

where $r_{H\bar{H},n}$ and $R_{\bar{H}\,\bar{H}}$ are respectively the cross-correlation and auto-correlation matrices of the CTF in the frequency direction and $E_p$ denotes the pilot symbols energy $|\tilde{X}_{k,n}|^2$.

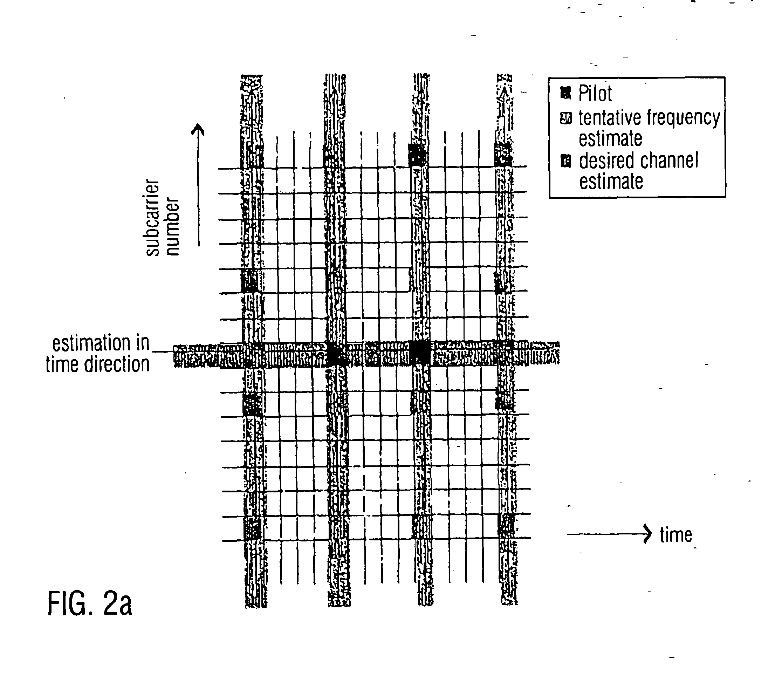

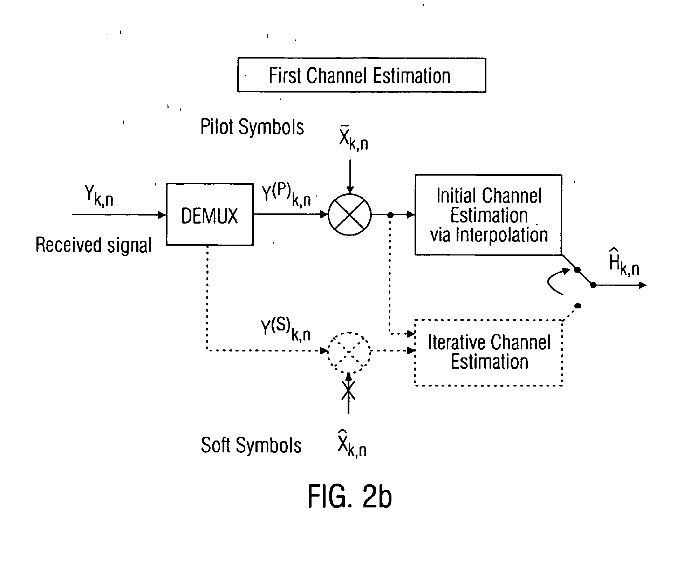

A subsequent filtering in the time direction is carried out in a similar manner in order to get channel estimates over the whole OFDM subcarrier grid. This initial channel estimation is graphically represented in Figure 2a and Figure 2b, wherein Figure 2a shows a first channel estimate via interpolation in frequency and time direction, and Figure 2b shows a first channel estimate (CE) calculation via interpolation. In Figure 2b, $E_p$ and $\left|\tilde{X}_{k,n}\right|^2$ denote respectively the signal at pilot and data symbol position.

In the following, the Iterative Channel Estimation procedure will be detailed.

After an initial channel estimation obtained via PACE, the soft feedback information provided by a channel decoder can be exploited in order to extend the number of subcarriers utilized for CE. In this case, extrinsic soft information on coded bits under the form of log-likelihood ratios (LLRs) is fed back to the channel estimation block.

Soft mapping: After re-interleaving, these LLRs are converted into symbol estimates via soft mapping. A generic soft mapper would form $\hat{X}$ from a constellation alphabet $\{A_m\}_{m=\{1,\ldots,Q\}}$ of cardinality $Q$ as follows:

$$\hat{X} = \sum_{m=1}^{Q} P\left(X = A_m\right) \cdot A_m \qquad (4)$$

In the latter, the symbol probabilities $P(X = A_m)$ are derived from the bit probabilities. Let $(b_1(m),\ldots,b_{\log2(Q)}(m))$ denote the string of bits the symbol $A_m$ is mapped onto. The symbol probability obtained from the sample of log-likelihood ratios $(L_1,\ldots,L_{\log2(M)})$ reads then:

$$P\left(X = A_m\right) = \prod_{j=1}^{\log_2(Q)} f_{b_j(m)}\left(L_j\right) \qquad (5)$$

where the function $f_i(x)$ is being defined in (28).

For example, a soft mapper for QPSK ($Q = 4$) would calculate soft symbols given the LLRs $L_1$ and $L_2$ of a pair of coded bits as follows:

$$\hat{X} = P(X = A_1) \cdot A_1 + P(X = A_2) \cdot A_2 + P(X = A_3) \cdot A_3 + P(X = A_4) \cdot A_4 \qquad (6)$$

where

$$P(X = A_m) = f_{b1(m)}(L_1) \cdot f_{b2(m)}(L_2) \qquad (7)$$

The soft symbols $\tilde{X}$ can be considered as remapped data symbol estimates, and can be calculated according to equations (6) and (7) as a weighted sum of constellation points $A_i$ (e.g. with I=1,2,3,4) of the constellation alphabet, wherein the weighting is based on probabilities P(X=$A_i$) for the constellation points. So, the remapping yields a point in a complex plane (the soft symbol $\hat{X}$) in dependence on the possible constellation points of the constellation alphabet and the respective probabilities for the constellation points provided by the (soft) decoder.

For example, the soft symbol $\hat{X}$ (also designated as remapped data symbol estimate) is zero, if the decoder indicates, that all the constellation points for a QPSK modulation have same probabilities. On the other hand, the soft symbol X is identical to a particular possible constellation point of the constellation alphabet, if the decoder indicates, that the probability for the particular constellation point is 100 percent.

Channel estimation with 2 cascaded Wiener filters: The soft symbols are used for the Wiener Filter design in addition to the perfectly known pilot symbols. At each turbo iteration, the channel estimate obtained after filtering in frequency direction becomes

$$\hat{H}^{(f)}_{k,n} = c'^{T}_{f} \cdot \tilde{h}_{n} \qquad (8)$$

In the latter, $\tilde{h}_{n} = \left[\tilde{H}_{k,n-N_1}, \dots, \tilde{H}_{k,n+N_2}\right]^{T}$ is a vector stacking the $(N_2 + N_1 + 1)$ Least-Square (LS) estimates which verify

$$\tilde{H}_{k,n} = \frac{Y_{k,n}}{\hat{X}_{k,n}} \qquad (9)$$

where $\hat{X}_{k,n}$ can be either a pilot symbol or a soft symbol estimate derived from the LLRs, depending on the symbol indices in frequency and time directions.

In a second step, the filtering in time direction follows:

$$\hat{H}^{(t)}_{k,n} = c'^{T}_{t} \cdot \hat{h}^{(f)}_{k} \qquad (10)$$

where the vector $\hat{h}^{(f)}_{n} = \left[\hat{H}^{(f)}_{k-N'_1,n}, \dots, \hat{H}^{(f)}_{k+N'_2,n}\right]^{T}$ comprises $(N'_2 + N'_1 + 1)$ channel estimates produced in (8) after filtering in frequency direction. The final channel estimates $\hat{H}_{k,n} = \hat{H}^{(t)}_{k,n}$ are then delivered to the demapper in the receiver chain for coherent detection.

With this iterative procedure, an interpolation is obviously not required anymore as the ICE technique is based on pilot and soft symbols from the whole time/frequency grid. Therefore, the Wiener filter coefficients contained in $c'_f$ and $c'_t$ from (8) and (10) are deduced from the Wiener-Hopf equations without interpolation. In frequency direction, we would have the standard expression:

$$c'_{f} = \left(R_{HH} + \left(\sigma^2_N / E_s\right) \cdot I\right)^{-1} \cdot r_{HH,f} \qquad (11)$$

where $R_{HH}$ accounts for the auto-correlation matrix of the CTF while $r_{HH,f}$ denotes the cross-correlation vector expressing the correlation between the desired CTF and the CTFs from the entire filtering window. In time direction, the Wiener-Hopf equations lead to an expression of $c'_t$ similar to that obtained for the frequency direction in (11). Indeed, the expressions for $c'_t$ and $c'_f$ differ only in the cross-/and auto-correlation matrices. Note that this iterative channel estimation is still performed in two successive steps, in frequency and in time directions and the filter orders are respectively $M_f = N_2 + N_1 + 1$ and $M_t = N'_2 + N'_1 + 1$.

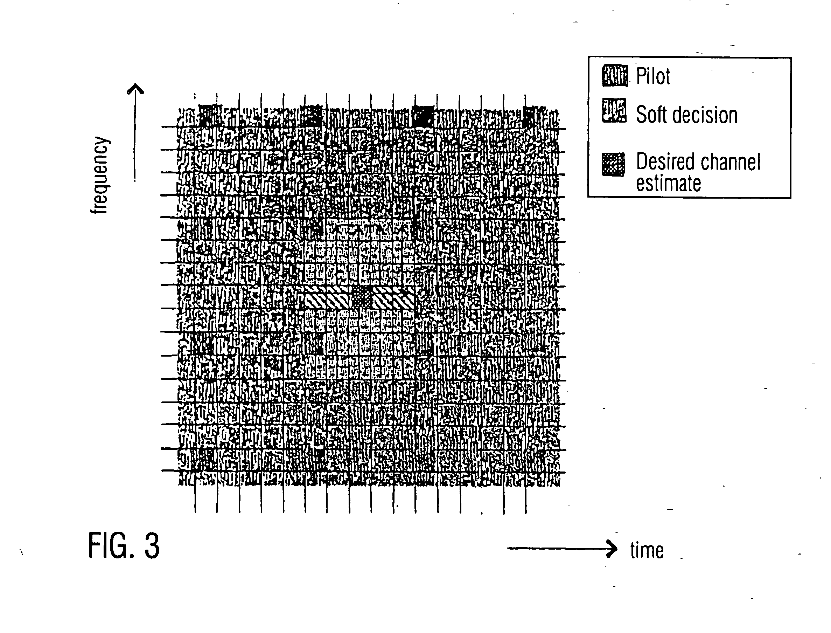

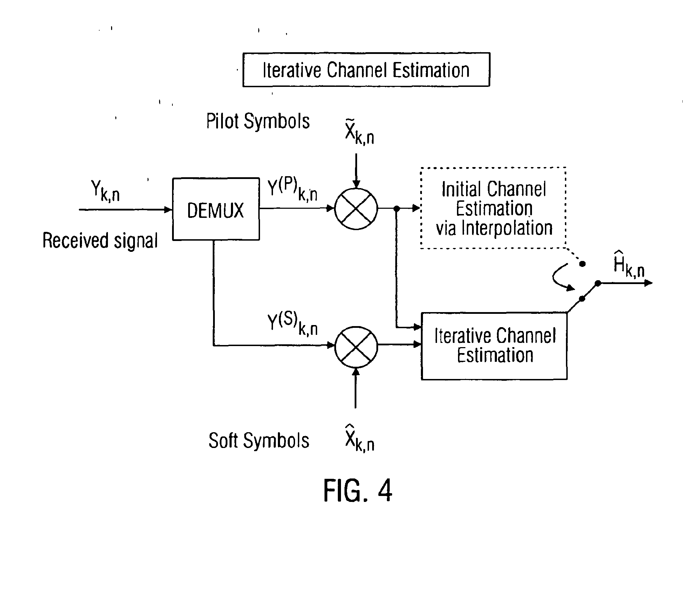

In [1], a similar estimator made of two cascaded one-dimensional Wiener filters, successively in time and in frequency directions, has been proposed. This separated channel estimation/detection approach is however still sensitive to channel error propagations due to a possibly erroneous first channel estimation via interpolation. The pilot symbol spacings in both time and frequency directions are therefore still key parameters for the performance of ICE techniques: a perfect reconstruction of the initial channel transfer function is only possible if the limits of the sampling theorem in the time and frequency domains are respected. The fulfillment of this requirement ensures the reliability of the first channel estimate before any turbo iteration. Figure 3 and Figure 4 depict the specific iterative part of the overall ICE procedure, wherein Figure 3 illustrates iterative channel estimation based on soft symbol estimates and pilot symbols, and wherein figure 4 shows channel estimation (CE) based on pilot tones and symbol estimates. In figure 4, $Y_{k,n}^{(P)}$ and $Y_{k,n}^{(S)}$ denote respectively the received signal at pilot and data symbol position.

Further optimizations will be described in detail below.

For the optimized ICE technique, the global procedure described above is kept: After soft mapping, channel estimation is performed through 2 successive filtering stages, in frequency and time direction. The principle of the improved ICE technique detailed below is to take into account the possible estimation imperfections induced by soft mapping for the computation of the Wiener filter coefficients. For that purpose, we introduce an equivalent signal model, which will serve as a basis for the derivation of the improved linear MMSE channel estimator. The equivalent signal model corresponds to the signal, which is visible at the input of the channel estimator and considers the variance of the symbol estimation error caused by decoding imperfections of the channel decoder.

The equivalent signal model used for the following considerations and derivations will be described in the next section.

In the sequel, we consider Wiener filtering in either time or frequency direction using a window of $M_F$ received signal samples, i.e. $M_F$ is the filter order. For the sake of simplicity, we omit in the following section the index corresponding to the unused signal dimension (time or frequency). If we refer to the example depicted in Fig. 3, we would have $M_F = 7$ for filtering in frequency direction, and $M_F = 5$ in time direction.

The modified, equivalent, signal model reads then

$$Y = \hat{X} h + n' \qquad (12)$$

where $y = [Y_1,..., Y_{MF}]^T$ is $M_F \times 1$ vector of stacked observations, $\hat{X} = \text{diag}(\hat{X}_1,..., \hat{X}_{MF})$ denotes the $M_F \times M_F$ diagonal matrix with pilot or soft symbols on its main diagonal, $h = [H_1, ... , H_{MF}]^T$ is a $M_F \times 1$ vector containing the channel coefficients and $n' = [N'_1,...,N'_{MF}]^T$ refers to the equivalent zero-mean additive noise.

In the following, an improved linear MMSE channel estimator will be described.

The objective of this section is to derive the coefficients of a linear MMSE channel estimator for ICE taking into consideration the equivalent signal model described above.

Filtering in the first direction : Let $\hat{h} = [\hat{H}_1,..., \hat{H}_{MF}]^T$ be a vector of channel estimates obtained after the first filtering stage, where $\hat{H}_{\lfloor MF/2 \rfloor}$ denotes the desired channel estimate. Then, according to the orthogonality condition for the derivation of the Wiener-Hopf equations [9], the linear estimator verifies:

$$\hat{h} = R_{HY} R_{YY}^{-1} y \qquad (13)$$

In the following, the correlation matrices $R_{Hy}$ and $R_{yy}$ are evaluated. At first, we have

$$R_{HY} = \varepsilon\left\{h\left(\hat{X}h + n'\right)^H\right\}$$
$$= \varepsilon\left\{hh^H\right\}\hat{X}^H + \varepsilon\left\{hn'^H\right\} \qquad (14)$$
$$= R_{HH}\hat{X}^H$$

where the last step results from the fact that the noise term n' and the channel coefficients from h are statistically independent. Note that in this section, $R_{HH}$ refers to the time or frequency auto-correlation matrix of the channel, depending on the direction of filtering. $\varepsilon$ designates the expecation value operator. Now we focus on $R_{YY}$:

$$R_{YY} = \varepsilon\left\{\left(\hat{X}h + n'\right)\left(\hat{X}h + n'\right)^H\right\}$$
$$= \hat{X}\varepsilon\left\{hh^H\right\}\hat{X}^H + \hat{X}\varepsilon\left\{hn'^H\right\} + \varepsilon\left\{n' h^H\right\}\hat{X}^H + \varepsilon\left\{n' n'^H\right\}$$
$$= \hat{X}R_{HH}\hat{X}^H + R_{N'N'}$$
$$= \hat{X}R_{HH}\hat{X}^H + \sigma_{N'}^2 I \tag{15}$$

The equivalent noise variance $\sigma_N^2$, from (15) is derived in the next section. Combining the expressions (14) and (15), the linear MMSE estimator (13) reads

$$\hat{h} = R_{HY}R_{YY}^{-1}y$$
$$= R_{HH}\hat{X}^H\left(\hat{X}R_{HH}\hat{X}^H + R_{N'N'}\right)^{-1}y$$
$$= R_{HH}\underbrace{\hat{X}^H\left(\hat{X}^H\right)^{-1}}_{I}\left(\hat{X}R_{HH} + R_{N'N'}\left(\hat{X}^H\right)^{-1}\right)^{-1}y \tag{16}$$
$$= R_{HH}\left(R_{HH} + \sigma_{N'}^2\left(\hat{X}^H\hat{X}\right)^{-1}\right)^{-1}\left(\hat{X}^H\right)^{-1}y$$

Filtering stage in the second direction: For the second filtering step, the channel estimates produced after the first filtering stage are filtered on the second signal direction (time or frequency). The filter bank has an expression similar to that of (16), except that the term $(\hat{X}^H)^{-1}y$ on the right-hand side of (16) has to be replaced by the vector $\hat{h}$ containing the channel estimates from the first stage. After the second filtering stage, we get a vector of channel estimates $\hat{h}^{(2)} = \left[\hat{H}_1^{(2)}, \ldots, \hat{H}_{M_r}^{(2)}\right]^T$. The desired channel estimates $\hat{H}_{\lfloor M_F/2\rfloor}^{(2)}$ from $\hat{h}^{(2)}$ is multiplexed with the other desired channel estimates obtained with a moving filtering window in order to get final channel estimates over the whole time/frequency plane. These final estimates are then forwarded to the soft-in/soft-out detector in the receiver chain for coherent detection.

The ICE procedure, consisting of two cascaded Wiener filters, is repeated at each turbo iteration, as in [1]. Generally, the iterative process is stopped when a stable state is achieved at the receiver.

Noise scaling: As 2 successive filtering operations are performed during the ICE procedure, the SNR visible to the second Wiener filter is improved thanks to the first filtering stage. This SNR enhancement was argued in [10] to be independent of the ordering of filtering, and should therefore be applied to the channel estimator in time and frequency direction. The SNR gain depends on the channel characteristics and the system parameters. Here, we choose the scaling factor $\alpha = \sqrt{\left(M_f + M_t\right)/2}$ proposed in [10], where $M_f$ and $M_t$ denote respectively the filter orders in frequency and time direction. For the numerical simulations, the noise power $\sigma_{N'}^2$ in (16) is consequently divided by $\alpha$ for the filters in time and frequency direction.

In the following section, the determination of the equivalent noise variance $\sigma_N^2$, will be outlined.

From the equivalent signal model (12), we have

$$n' = (X - \hat{X})h + n \tag{17}$$

Let $X - \hat{X} = D = diag(d_1,\ldots,d_{MF})$ be the symbol error matrix where $d_i = X_i - \hat{X}_i$. Then the covariance matrix $R_{N'N'}$ can be written as

$$R_{N'N'} = \varepsilon\{(Dh + n)(Dh + n)^H\} \qquad (18)$$

$$= \varepsilon\{(Dhh^H D^H)\} + R_{NN} \qquad (19)$$

$$= \sum_{i=1}^{M_r} \left( \begin{bmatrix} 0_{(i-1)\times M_r} \\ r_{HH,i}^T \\ 0_{(M_r-i)\times M_r} \end{bmatrix} \cdot \varepsilon\{d_i D^H\} \right) + R_{NN} \qquad (20)$$

where the cross-correlation vector $r_{HH,i}$ refers to the $i^{th}$ column of $R_{HH} = \varepsilon\{hh^H\}$. Since the symbol errors $\{d_i\}$ are uncorrelated, the expectation involving data from (20) reads

$$\varepsilon\{d_i D^H\} = \delta_i e_i e_i^T$$
$$e_i = \left[0_{1\times(i-1)}, 1, 0_{1\times(M_F-i)}\right]^T \qquad (21)$$

In the latter, $\delta_i = 0$ if $X_i$ is a pilot symbol $(X_i = \hat{X}_i)$. Otherwise, the symbol error variance $\delta_i$ can be expressed in terms of the first and second order statistics of the data symbols:

$$\delta_i = \underbrace{M_2(X_i) - |M_1(X_i)|^2}_{\text{symbol variance}} \qquad (22)$$

The first and second moments of a data symbol $X_i$ are given by

$$M_1(X_i) = \sum_{m=1}^{Q} P(X_i = A_m) \cdot A_m = \hat{X}_i \qquad (23)$$

$$M_2(X_i) = \sum_{m=1}^{Q} P(X_i = A_m) \cdot |A_m|^2 \qquad (24)$$

where $\{A_1,...,A_Q\}$ represents a modulation alphabet with cardinality Q and the symbol probabilities are obtained through the product of the bit probabilities derived from the output of the channel decoder, as in (5).

From (21) and (20), we derive a more compact expression of the covariance matrix of $n'$:

$$R_{N'N'} = \Delta + R_{NN} \qquad (25)$$

Where $R_{NN} = \sigma_N^2 I$ refers to the covariance matrix of the thermal noise. The diagonal matrix

$\Delta = \text{diag}\left(\sigma_{H_1}^2 \delta_1, ..., \sigma_{H_{M_r}}^2 \delta_{M_r}\right)$ is related to the variance $d_i$ of the data symbols and the approximated

CTF power $\sigma_{H_i}^2$ given in (33) in the appendix. Note that over a large number of samples, for instance if all $N_c$ subcarriers of an OFDM symbol are used for Wiener filtering in frequency direction, the standard expectation $\varepsilon\{H_i|^2\} = 1$ holds.

However, when the size of the filtering window $M_F$ is small, this overall expectation is not accurate enough to cope with the variations of the CTF within an OFDM frame/symbol and an approximation of $\{|H_i|^2\}$ is preferable to the use of the overall expectation.

The diagonal elements of $\Delta$ are finally averaged in order to obtain the variance of the equivalent noise $n'$. By averaging the diagonal elements of $\Delta$, we obtain the simplified covariance matrix used for the improved MMSE filter design in (16):

$$R_{N'N'} = \sigma^2_{N'} . I \qquad (26)$$

$$\sigma^2_{N'} = \sigma^2_N + \frac{1}{M_F} \sum_{i=1}^{M_F} \sigma^2_{H_i} \delta_i \qquad (27)$$

Note that in the preceding equation, the mean varies with the position of the filtering window. In order to have a constant noise power over the OFDM frame, $\sigma^2_{N'}$ can be alternatively averaged over the entire OFDM frame. These two cases are evaluated by means of numerical simulations described below.

In the following, a comparison between the standard and the improved MMSE channel estimator will be given.

The channel estimators (11) and (16) differ essentially in the part related to the SNR, visible in the right-hand term of the matrix to be inverted. In (11), the SNR is expressed in a standard manner as the ratio of the average data symbol energy to the variance of the thermal noise, i.e. $SNR = \dfrac{E_s}{\sigma^2_N}$. In (16), however, the derivation of the improved linear MMSE estimator leads to another SNR expression, which takes into consideration the fact that the soft symbols used for filtering are noisy versions of the transmitted symbols. This effective signal-to-noise ratio can be written as: $SNR_{eff} = \dfrac{\varepsilon\left\{|\hat{X}_i|^2\right\}}{\sigma^2_{N'}} \leq SNR$. In other words, the standard linear MMSE estimator overestimates the effective SNR, which results in a performance degradation in the low SNR regime, when soft mapping is prone to estimation errors.

In case of perfect soft feedback from the channel decoder, we have $\hat{X}_i = X_i$ and $\sigma^2_N = \sigma^2_{N'}$ which yields $\Delta = 0$ in (25) and $\varepsilon\left\{\hat{X}^H \hat{X}\right\} = E_s I$ in (16), so that the improved linear estimator coincides with the standard estimator from (11). This occurs specifically in the high SNR regime, and/or if a strong channel encoder is employed.

For Wiener filtering, the filtering operation can possibly be carried out over the whole OFDM frame in the time direction, and over the complete subcarrier range in the frequency direction. In this case, we would have filter sizes of K and $N_c$ respectively in time and frequency direction. In practice, reduced filter sizes are employed as suggested in the upcoming section. The filtering window is centered around the desired channel estimate as shown in Figure 3 and, in contrast with the standard ICE technique, the filter coefficients in (16) are updated when the window moves in frequency or time direction. This is due to the fact that the variance of the equivalent noise in (27) depends on the position of the filtering window on the time/frequency plane. In other terms, for each desired channel estimate, a different MMSE filter bank has to be evaluated.

The real benefit from the improved estimator becomes apparent when the pilot symbol spacings widen. In that case, the pilot grid is so sparse that the equivalent noise power in (27) is dominated by the contribution originating from the soft mapping step. On the other hand, when the first channel estimates obtained with PACE are reliable enough, i.e. for small pilot spacings in time and frequency directions, the soft symbols obtained through soft mapping are more reliable and the performance improvement over conventional ICE techniques [1] decreases.

Further, complexity reduction can be performed.

The proposed algorithm has the major drawback to increase the decoding complexity because the MMSE filter coefficients are intrinsically different for each channel estimate. In order to avoid this problem, the variance of the equivalent noise n' and the energy of the soft symbol estimates could be averaged over the whole OFDM frame so that the linear MMSE estimator (16) is computed only once per OFDM frame. This simplification is relevant as far as the effective SNR does not vary drastically within an OFDM frame. This assumption is valid if one assumes that pilot symbols are scarce on the OFDM subcarrier grid and if the reliability of the soft information on the coded bits is homogeneous over the entire OFDM frame. The latter prerequisite is verified for an iterative BICM-OFDM system, where soft information on the coded bits from the channel decoder is interleaved before being utilized to form the soft symbol estimates.

As mentioned above, the optimized ICE method can otherwise be simplified by choosing the Wiener filter sizes appropriately, i.e. below the thresholds $N_c$ and K in frequency and/or time direction. Instead of filtering over the total number of OFDM subcarriers or symbols, a smaller filter order makes more sense if the correlation matrix $R_{HH}$ is not full-rank, which is generally the case for realistic channel models. Similar simplifications, employed previously for standard PACE methods in [11], can be applied to the proposed optimized ICE technique as well, like low-rank channel estimators. Finally, the matrix inversion needed on the left-hand side of (16) can be computed efficiently by using a method based on a SVD (Singular Value Decomposition) of the matrix to be inverted [3] (more details will be given below).

In the following, some further suggestions for possible improvements will be explained.

Firstly, a method for a conversion of bit-wise Log-Likelihood Ratios into bit probabilities will be described.

Required to perform a soft symbol mapping before the CE stage, the probability that the bits $_i$ has been transmitted given the Log Likelihood Ratio (LLR) $x$ at this bit position is

$$f_i(x) = \frac{1}{2}\left(1 + (-1)^{i+1} \tanh\left(\frac{x}{2}\right)\right) \qquad (28)$$

or alternatively one can distinguish between the cases $i = 1$ and $i = 0$ and rewrite $f_i(x)|_{i=\{1,0\}}$ as follows

$$f_0(x) = \frac{1}{e^x + 1} \qquad (29)$$

$$f_1(x) = \frac{1}{e^{-x} + 1} \qquad (30)$$

Next, the evaluation of the channel transfer power values $\sigma_{H_i}^2$ will be described.

The amplitude of the channel coefficient $H_i$ is not a-priori known to the receiver. In order to evaluate its power, we observe at first that

$$\frac{Y_i}{X_i} = H_i + \frac{N_i}{X_i} \qquad (31)$$

We assume that the variance of the thermal noise $\sigma_N^2$ and the average data symbol power $E_s$ are known to the receiver. Due to the statistical independence between the noise term and the channel coefficients, we can write the following approximation:

$$\frac{|Y_i|^2}{E_s} \approx |H_i|^2 + \frac{\sigma_N^2}{E_s} \qquad (32)$$

which gives finally

$$\sigma^2_{H_i} = |H_i|^2 \approx \frac{|Y_i|^2 - \sigma^2_N}{E_s} \qquad (33)$$

Simulations suggest that this estimation is reliable enough for the computation of the mean on the right hand side of (27), even with moderate values of $M_F$.

Also, an efficient matrix inversion can be performed.

The inversion of the matrix $R_{HH} + \sigma^2_{N'}(\hat{X}^H\hat{X})^{-1}$ in (16) can be carried out without the large computational cost usually required for a standard matrix inversion. The only requirement is that $\sigma^2_{N'}(\hat{X}^H\hat{X})^{-1}$ is chosen to be proportional to the identity matrix. This is achieved by averaging the elements of this diagonal matrix. The matrix to be inverted becomes then $R_{HH} + 1/\gamma \cdot I$, where $\gamma$ corresponds to the equivalent SNR averaged over the filtering window, or alternatively over the OFDM frame if only one filter bank per OFDM frame is employed. Let $\{u_1,...,u_{Mf}\}$ be the $M_f$ eigenvectors of $R_{HH}$ with eigenvalues $\{\lambda_1, ... ,\lambda_{Mf}\}$. Using a complexity reduction technique described in [3], we can invert $R_{HH} + 1/_\gamma \cdot I$ as follows:

$$(R_{HH} + 1/\gamma \cdot I)^{-1} = \sum_{i=1}^{M_f} \frac{1}{\lambda_i + 1/\gamma} \cdot u_i u_i^H \qquad (34)$$

In the latter, the basis formed by the products of eigenvectors $u_i u_i^H$ needs to be computed only once, as long as the correlation properties of the channel remain constant, and can be stored for an efficient calculation of the filter coefficients. The matrix inversion is therefore reduced to a simple sum of matrices multiplied by the scaling factors $(\lambda_i + 1/\gamma)^{-1}$.

Finally, simulation results for an implementation of the inventive concept will be shown.

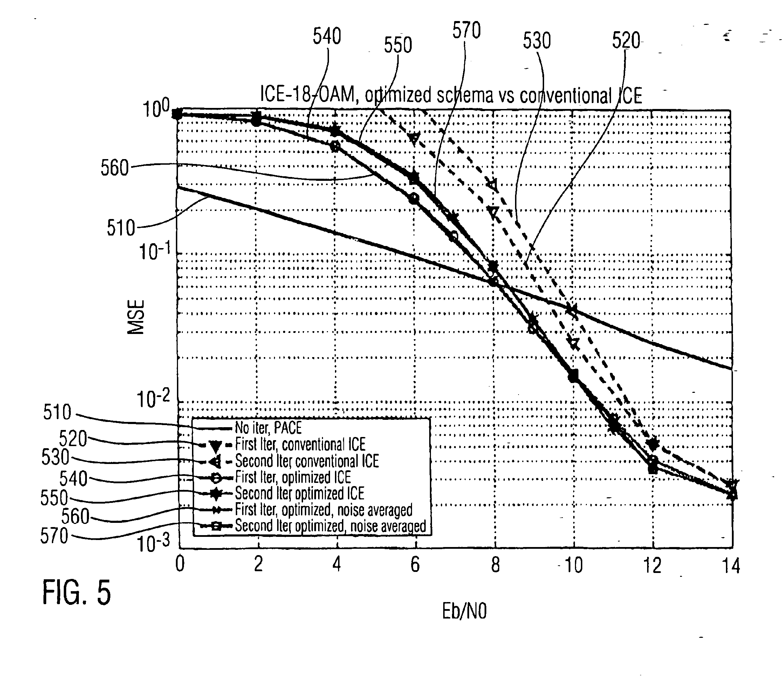

The performance improvement resulting from the computation of the optimal filter coefficients is illustrated via numerical simulations. We consider wireless data transmission with a 16-QAM modulation alphabet over a time-varying, frequency selective channel defined within the framework of the IST-WINNER project for the wide area, macro urban propagation scenario. We assume a normalized Doppler frequency of $f_c$ = 0.018, obtained at a mobile velocity of $v = 70$ $km/h$ for a carrier frequency of 5 GHz. The assumed system bandwidth is $BW = 20\ MHz$ and the OFDM symbol duration is set to $T = 50\mu s$. The subcarrier spacings in time and frequency directions fulfill the requirements imposed by the sampling theorem and are set respectively to $D_t = 8$ and $D_f = 8$. For ICE, the filter orders in time and frequency directions are respectively $M_f = 8$ and $M_t = 9$. For the optimized ICE technique, the noise variance (27) is either averaged on a filtering window of size $M_f$ as described above, or alternatively averaged over the entire OFDM frame, i.e. the variance of the equivalent noise $\sigma^2_{N'}$ is considered to be constant over the frame (denoted by "noise averaged" on the figure 5).

It can be read directly on the figure 5 that the proposed ICE technique outperforms the non iterative channel estimation method from $E_b/N_0$ = 8 dB whereas the conventional iterative scheme achieves this only from $E_b/N_0$ = 9.3 dB. The performance gain shrinks as expected towards the high SNR regime, because the soft symbol estimates become more and more reliable. In the low SNR regime, the impact of the computation of the effective SNR for the optimized scheme is clearly reflected in the curves: the MSE obtained with the optimized ICE technique never exceeds 1 while the MSE derived from the conventional scheme exceeds 1 below $E_b/N_0$ = 4.5 dB. Otherwise, one can notice that for both ICE methods, an optimum is achieved already after the first turbo iteration and no gain in terms of MSE is observed if the number of iterations exceeds 1. Otherwise, it can be noticed that the size of the averaging window for the computation of $\sigma_{N'}2$ does not affect significantly on the CE performance. In both cases (average over the filtering window as in (27) or over the entire OFDM frame), the same channel MSE is achieved.

In other words, figure 5 shows the mean square error as a function of the signal to noise ratio. A first curve 510 describes a non-iterative method using pilot symbols. A second curve 520 describes the result of a conventional iterative channel estimation after a first iteration, and a third curve describes the output of a conventional iterative channel estimation after a second iteration. A fourth curve 540 describes an inventive optimized channel estimation after a first iteration, while a fifth curve 550 describes the inventive optimized channel estimation after a second iteration. A sixth curve 560 describes an inventive iterative channel estimation using noise averaging after a first iteration, and a seventh curve 570 describes the inventive iterative channel estimation using noise averaging after a second iteration. Note that the fourth curve and the sixth curve are patially overlapping. The same also applies to the fifth curve and the seventh curve.

In other words, figure 5 shows performance in terms of channel mean squared error (MSE) of the new inventive iterative channel estimation (ICE) method (solid curves) vs the state-of-the-art technique (dashed curves) after the 1st and the 2nd turbo iteration. The line without markers depicts the channel MSE achieved with PACE. The label "noise averaged" refers to the improved iterative channel estimation technique where the equivalent noise variance $\sigma_{N'}^2$ is averaged over the entire OFDM frame.

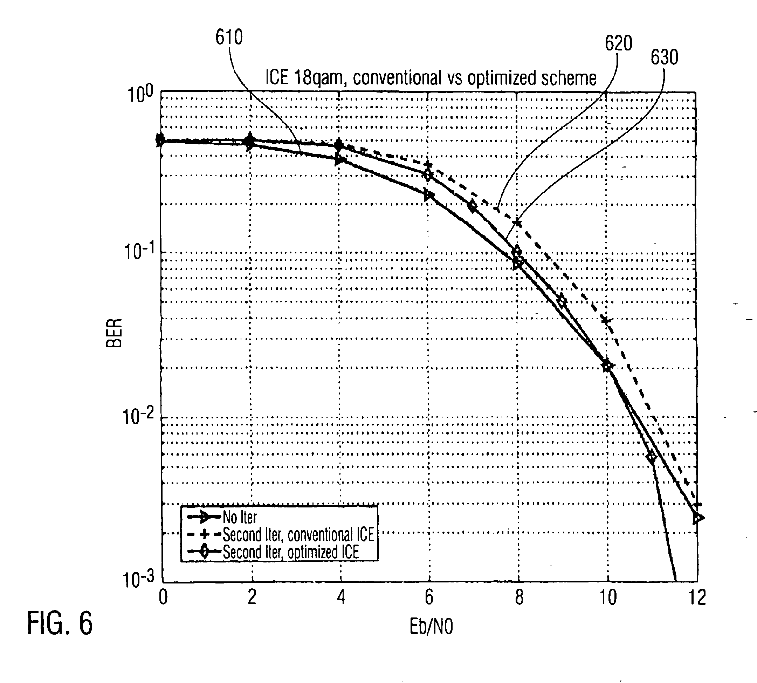

Figure 6 shows the performance in terms of BER achieved by the optimized method after 2 turbo iterations compared with that obtained with the conventional ICE scheme. A gain of 0.5 dB can be observed in the low and medium SNR domain, which confirms the improvements visible in the MSE curves. The SNR gain is limited by the fact that the poor channel estimates in the low SNR regime do not allow noticeable performance enhancements, while for larger values of $E_b/N_0$, the use of a strong channel encoder for simulations compensates for the loss of channel estimation accuracy induced by the standard ICE method. The SNR gain may therefore vary with the type of channel encoder employed in the transceiver chain.

In other words, Fig. 6 describes the bit error rate (BER) as a function of the signal-to-noise ration (Eb/N0) for different channel estimation techniques. A first curve 610 describes the bit error rate for a PACE technique using only pilot symbols. A second curve 620 describes the bit error rate after for a conventional iterative channel estimation a second iteration, while a third curve 630 describes a bit error rate using the inventive optimized channel estimation after a second iteration.

So, figure 6 characterizes performance in terms of bit error rate (BER) of the new inventive iterative channel estimation method vs. the state-of-the-art technique (dashed curve) after the 2nd turbo iteration. The curve labeled "no iter" refers to the bit error rate (BER) obtained with pilot aided channel estimation (PACE).

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

It can be concluded that the present invention addresses the problem of channel estimation for OFDM systems in a time-varying, frequency selective propagation environment. In the context of the development of future transceiver techniques, the use of the turbo principle is of particular interest as current and future wireless systems utilize channel coding in order to enhance the receiver performance. In particular, the application of this principle to the channel estimation task is promising because such a scheme allows achieving a better receiver performance while keeping the detection complexity reasonably low. In this disclosure, a new iterative channel estimation algorithm dedicated to OFDM-based transceivers is described in detail.

The inventive solution is adapted to a realistic scenario in which the data symbol estimates are subject to decision errors. These decision errors are taken into account in the inventive Wiener filter design. In other words, the inventive solution takes into account the noise generated by soft symbol estimation. Also, the inventive solution considers the second order statistics of the data symbols required for higher-order modulation alphabets such as 16-QAM. Also, the inventive solution is appropriate to work under realistic channel conditions. Also, unlike other methods, the inventive solution is directly applicable to channel estimation for standard OFDM systems. So, the inventive optimised iterative channel estimation technique for OFDM systems creates an improved linear MMSE channel estimator, specifically suited for iterative channel estimation.

Terminology and Abbreviations:

| | |
|---|---|
| BICM | Bit Interleaved Coded Modulation |
| CE | Channel Estimation |
| CP | Cyclic Prefix |
| CTF | Channel Transfer Function |
| ICE | Iterative Channel Estimation |
| LLR | Log Likelihood Ratio |

# EP 1 748 610 B1

LS      Least Square
MMSE    Minimum Mean Squared Error
M-PSK    M-ary Phase-Shift Keying
OFDM    Orthogonal Frequency Division Multiplexing
PACE    Pilot Aided Channel Estimation
QAM     Quadrature Amplitude Modulation
QPSK    Quadrature Phase-Shift Keying
SNR     Signal-to-Noise Ratio

Reference List:

[1]    F. Sanzi, S. Jelting, and J. Speidel, "A comparative study of iterative channel estimators for mobile OFDM systems," IEEE Transactions on Wireless Communications, Vol. 5, No. 2, pages 849-859 September 2003.

[2]    M. Tüchler, R. Otnes, and A. Schmidbauer, "Performance of Soft Iterative Estimation in Turbo Equalization," IEEE International Conference on Communications (ICC), pages 1858-1862, May 2002.

[3]    H. Meyr, M. Moeneclaey, and S. Fechtel, Digital Communication Receivers, Synchronization, Channel Estimation and Signal Processing, Vol. 2. Wiley & Sons, 1998.

[4]    J. Wehinger, C. Mecklenbräuker, R. Müller, T. Zemen, and M. Loncar, "On Channel Estimators for Iterative CDMA Multiuser Receivers in Flat Rayleigh Fading," IEEE International Conference on Communications (ICC), Vol. 5, pages 2497-2501, June 2004.

[5]    T. Zemen, M. Loncar, J. Wehinger, C. Mecklenbraüker, and R. Müller, "Improved Channel Estimation for Iterative Receivers," IEEE Global Telecommunications Conference (GLOBECOM), Vol. 1, pages 257-261, December 2003.[6]T. Zemen, J. Wehinger, C. Mecklenbraüker, and R. Müller, "Iterative detection and channel estimation for MC-CDMA," IEEE International Conference on Communications (ICC), Vol. 5, pages 3462-3466, May 2003.

[7]    L.M. Davis, I.B. Collings, and P. Hoeher, "Joint MAP equalization and channel estimation for frequency-selective and frequency-flat fast-fading channels," IEEE Transactions on Communications, Vol. 49, No. 12, pages 2106-2114, December 2001.

[8]    G. Auer, A. Dammann, and S. Sand, "Comparison of Low Complexity OFDM Channel Estimation Techniques," Proc. of Int. OFDM Workshop, Hamburg, Germany, 2003.

[9]    L. Scharf, Statistical Signal Processing. Addison Wesley, 1991.

[10]   G. Auer, "Channel Estimation for OFDM Systems with Multiple Transmit Antennas by Filtering in Time and Frequency," in VTC03fall, Oct. 2003.

[11]   O. Edfors and M. Sandell and J.-J. Van De Beek and S.K. Wilson and P.O. Börjesson, "OFDM Channel Estimation by singular value decomposition," IEEE Trans. Communications, Vol. 46, pages 931-939, 1998.

**Claims**

1. Apparatus (100; 200) for estimating a channel for an OFDM transmission system, comprising:

   a receiver (110) for receiving an OFDM symbol (114; $Y_{k,l} P_\varsigma$) having pilot tones at certain pilot positions within the OFDM symbol;
   a channel values provider (118; 210) for estimating channel values at the pilot positions using the received OFDM symbol and knowledge on the pilot tones, and for interpolating the channel values to obtain interpolated channel values at data positions different from the pilot positions;
   a decoder (126; 224, 230, 232) for decoding the OFDM symbols using the channel values at the data positions, to obtain decoded data values;

a remapper (138; 242, 246) for remapping the decoded data values (134) into remapped data symbol estimates (146; 248); and

a channel estimator (150; 250) for estimating channel values at the data positions, using the received OFDM symbol (114; $Y_{k,l}$ $P_\zeta$) and the remapped data symbol estimates (146; 248), to obtain improved channel values (158; 251) at the data positions,

wherein the channel estimator (150; 250) is operative to calculate the channel values (158; 251) at the data positions based on an equivalent noise value (154; 262) representing a noise energy which is higher than a noise energy of the thermal noise (266),

wherein the equivalent noise value is a superposition of the thermal noise and symbol uncertainties,

wherein the channel estimator (150; 250) for estimating the channel values is adapted to calculate the channel values (158; 251) at the data positions by applying a linear filter operation to the received OFDM symbols (114; $Y_{k,l}$, $P_\zeta$), wherein the linear filter operation is adapted dependent on the equivalent noise value.

2. The apparatus (100; 200) of claim 1, wherein the channel estimator (150; 250) is operative to calculate the channel values (158; 251) at the data positions using a ratio between an equivalent noise energy (154; 262), which is higher than the noise energy of the thermal noise, and an energy measure (284) of remapped data symbol estimates (146; 248).

3. The apparatus (100; 200) of claim 1 or 2, wherein the equivalent noise value (154; 262) represents a noise energy which is lower than five times a noise energy of the thermal noise.

4. The apparatus (100; 200) of one of claims 1 to 3, wherein the equivalent noise value (154; 262) is calculated to describe stochastic decoding errors when obtaining decoded data values (134; 278) from the OFDM symbols (114; $Y_{k,l}$).

5. The apparatus (100; 200) of one of claims 1 to 4,
wherein the linear filter operation is described by a product of a channel-receive-signal cross-correlation-matrix and an inverse of a receive-signal auto-correlation-matrix, wherein diagonal elements of the receive-signal auto-correlation-matrix are dependent on the equivalent noise value (154; 262).

6. The apparatus (100; 200) of one of claims 1 to 5, further comprising an equivalent noise calculator (260) for calculating the equivalent noise value (262) as a sum of a thermal noise value (266) and an average of a number of symbol noise values (272), the symbol noise values (272) describing a stochastic error introduced by an erroneous decoding of OFDM symbols (114, $Y_{k,l}$).

7. The apparatus (100; 200) of claim 6, further comprising a symbol noise value calculator (280), the symbol noise value calculator (280) being operative to calculate symbol variances ($\delta_i$, 276) based on symbol probabilities ($P(X_i)$ = $A_m$, 278) provided by the decoder (224, 230, 232) and to derive the symbol noise values (272) based on the symbol variances ($\delta_i$, 276).

8. The apparatus (100; 200) of claim 7, wherein the symbol noise calculator (280) is further adapted to set the symbol noise values ($\delta_i$, 276) to zero for OFDM symbols ($P_\zeta$) in pilot positions.

9. The apparatus (100; 200) of claim 7 or claim 8,
wherein the symbol noise value calculator (280) is adapted to calculate the symbol noise values as products of the symbol variances ($\delta_i$, 276) and corresponding channel transfer power values ($\sigma_{Hi}^2$, 274), the channel transfer power values ($\sigma_{Hi}^2$, 274) describing a magnitude of a channel transfer function relevant for the transmission of the modulation symbol for which the symbol noise value (272) is calculated.

10. The apparatus (100; 200) of claim 9, further comprising a channel transfer power value calculator (281) for calculating the channel transfer power value ($\sigma_{Hi}^2$, 274) for an OFDM symbol (114, $Y_{k,1}$) by evaluating a quotient of a received symbol power and a transmitted symbol power for the respective OFDM symbol.

11. The apparatus (100; 200) of claim 10, wherein the channel transfer power calculator (281) is adapted to calculate the received symbol power by subtracting a thermal noise power value (266) from a received signal power for the OFDM symbols ($Y_{k,1}$)

12. The apparatus (100; 200) of one of claims 1 to 11, wherein the channel estimator (150; 250) is adapted to calculate the channel values at the data positions based on an effective signal-to-noise ratio, which is calculated considering erroneous OFDM symbol decoding by the decoder (126; 224, 230, 232), and which is lower than a theoretical signal-to-noise value, the theoretical signal-to-noise value being defined as a ratio of a symbol energy and a thermal noise power value (266).

13. The apparatus (100; 200) of one of claims 1 to 11, wherein the channel estimator (150; 250) is adapted to calculate the channel values (158; 251) at the data positions based on an effective signal-to-noise ratio, which is calculated considering erroneous OFDM symbol decoding by the decoder (126; 224, 230, 232), and which is lower than a soft-symbol signal-to-noise ratio, the soft-symbol signal-to-noise ratio being defined as a quotient between an expectation value of squared amplitudes of estimated data symbols (146; 248) provided by the remapper (138; 246) and a thermal noise power value (266).

14. The apparatus (100; 200) of one of claims 1 to 13, wherein the channel estimator (150; 250) is adapted to calculate the channel values (158; 251) at the data positions based on an effective signal-to-noise ratio, wherein the channel estimator (150; 250) is further adapted to calculate the effective signal-to-noise ratio as a quotient of an expectation value of squared amplitudes of estimated data symbols (146; 248) provided by the remapper (138; 246) and the equivalent noise value (154; 262).

15. The apparatus (100; 200) of one of claims 1 to 14, wherein the channel value provider (118; 210) and the channel estimator (150; 250) are designed to share at least one component of a calculation hardware for calculating the channel values at the pilot positions and the channel values at the data positions.

16. The apparatus (100; 200) of one of claims 1 to 15, further comprising an averager for averaging equivalent noise values (154; 262) over a plurality of data positions to obtain an averaged equivalent noise value, wherein the channel estimator (150; 250) is further adapted to calculate the channel values (158; 251) at a plurality of data positions using the averaged equivalent noise value.

17. The apparatus (100; 200) of one of claims 1 to 16, wherein the channel estimator (150; 250) is adapted to calculate the channel values (158; 251) by performing a first linear filter operation of the received OFDM symbols (114; $Y_{k,1}$, $P_\zeta$) in a first direction to obtain one-time filtered values, and a second linear filter operation of the one-time filtered values to obtain the channel values over a region extended in time and frequency,
wherein the first direction is a frequency direction and a second direction is a time direction, or the first direction is the time direction and the second direction is the frequency direction.

18. The apparatus (100; 200) of claim 17, wherein the first filter operation comprises applying a filter of a first filter order M1 and using a first partial noise power value N1, and wherein the second filter operation comprises applying a filter of a second filter order M2 and using a second partial noise power value N2,

wherein the first partial noise power value N1 is calculated as $N1 = \dfrac{\sigma_{N'}^2}{\alpha}$ and the second partial noise power value N2 is calculated as $N2 = \dfrac{\sigma_{N'}^2}{\beta}$, with $\alpha \geq 1$, $\beta \geq 1$ and

$$0.5\sqrt{(M1+M2)/2} \leq \alpha, \beta \leq 2\sqrt{(M1+M2)/2}.$$

19. Method for estimating a channel for an OFDM transmission system, the method comprising the steps of:

receiving (110) an OFDM symbol (114; $Y_{k,1}$, $P_\zeta$) having pilot tones at certain pilot positions within the OFDM symbol;
estimating (118; 210) channel values at the pilot positions using the received OFDM symbols (114; $Y_{k,l}$, $P_\zeta$) and knowledge on the pilot tones;
interpolating (118; 210) the channel values to obtain interpolated channel values at data positions different from the pilot positions;
decoding (126; 224, 230, 232) the received OFDM symbols (114; $Y_{k,l}$, $P_\zeta$) using the channel values (122) at

**EP 1 748 610 B1**

the data positions to obtain decoded data values (134; 278)

remapping (138; 242, 246) the decoded data values (134; 278) into remapped data symbol estimates (146; 248); and

estimating (150; 250) channel values (158; 251) at the data positions using the received OFDM symbol (114; $Y_{k,l}$, $P_\zeta$) and the remapped data symbol estimates (146; 248) to obtain improved channel values (158; 251) at the data positions by calculating the channel values (158; 251) at the data positions based on an equivalent noise value (154; 262) representing a noise energy which is higher than a noise energy of the thermal noise,

wherein the equivalent noise value is a superposition of the thermal noise and symbol uncertainties,

wherein the channel values at the data positions are calculated by applying a linear filter operation to the received OFDM symbols, and

wherein the linear filter operation is dependent on the equivalent noise value.

20. Computer program having a program code for performing the method in accordance with claim 19, when the computer program runs on a computer.


**Patentansprüche**

1. Vorrichtung (100; 200) zum Schätzen eines Kanals für ein OFDM-Übertragungssystem, die folgende Merkmale aufweist:

einen Empfänger (110) zum Empfangen eines OFDM-Symbols (114; $Y_{k,1}$, $P_\zeta$) mit Pilottönen an bestimmten Pilotpositionen innerhalb des OFDM-Symbols;

einen Kanalwertebereitsteller (118; 210) zum Schätzen von Kanalwerten an den Pilotpositionen unter Verwendung des empfangenen OFDM-Symbols und einer Kenntnis der Pilottöne und zum Interpolieren der Kanalwerte, um interpolierte Kanalwerte an Datenpositionen zu erhalten, die sich von Pilotpositionen unterscheiden;

einen Decodierer (126; 224, 230, 232) zum Decodieren der OFDM-Symbole unter Verwendung der Kanalwerte an den Datenpositionen, um decodierte Datenwerte zu erhalten;

einem Umabbilder (138; 242, 246) zum Umabbilden der decodierten Datenwerte (134) zu umabgebildeten Datensymbolschätzwerten (146; 248) und

einen Kanalschätzer (150; 250) zum Schätzen von Kanalwerten an den Datenpositionen unter Verwendung des empfangenen OFDM-Symbols (114; $Y_{k,l}$, $P_\zeta$) und der umabgebildeten Datensymbolschätzwerte (146; 248), um verbesserte Kanalwerte (158; 251) an den Datenpositionen zu erhalten,

wobei der Kanalschätzer (150; 250) wirksam ist, um die Kanalwerte (158; 251) an den Datenpositionen basierend auf einem Äquivalentrauschwert (154; 262) zu berechnen, der eine Rauschenergie darstellt, die höher als eine Rauschenergie des thermischen Rauschens (266) ist,

wobei der Äquivalentrauschwert eine Überlagerung des thermischen Rauschens und von Symbolunsicherheiten ist,

wobei der Kanalschätzer (150; 250) zum Schätzen der Kanalwerte angepasst ist, um die Kanalwerte (158; 251) an den Datenpositionen durch ein Anwenden einer linearen Filteroperation auf die empfangenen OFDM-Symbole (114; $Y_{k,1}$, $P_\zeta$) zu berechnen, wobei die lineare Filteroperation abhängig von dem Äquivalentrauschwert angepasst ist.

2. Die Vorrichtung (100; 200) gemäß Anspruch 1, bei der der Kanalschätzer (150; 250) wirksam ist, um die Kanalwerte (158; 251) an den Datenpositionen unter Verwendung eines Verhältnisses zwischen einer Äquivalentrauschenergie (154, 262), die höher als die Rauschenergie des thermischen Rauschens ist, und einem Energiemaß (284) von umabgebildeten Datensymbolschätzwerten (146; 248) zu berechnen.

3. Die Vorrichtung (100; 200) gemäß Anspruch 1 oder 2, bei der der Äquivalentrauschwert (154, 262) eine Rauschenergie darstellt, die niedriger als das Fünffache einer Rauschenergie des thermischen Rauschens ist.

4. Die Vorrichtung (100; 200) gemäß einem der Ansprüche 1 bis 3, bei der der Äquivalentrauschwert (154; 262) berechnet ist, um stochastische Decodierfehler zu beschreiben, wenn decodierte Datenwerte (134; 278) aus den OFDM-Symbolen (114; $Y_{k,1}$) erhalten werden.

5. Die Vorrichtung (100; 200) gemäß einem der Ansprüche 1 bis 4, wobei die lineare Filteroperation durch ein Produkt einer Kanalempfangssignal-Kreuzkorrelationsmatrix und einer Inversen einer Empfangssignal-Autokorrelationsmatrix beschrieben ist, wobei diagonale Elemente der Empfangssignal-Autokorrelationsmatrix von dem Äquivalentrauschwert (154; 262) abhängig sind.

6. Die Vorrichtung (100; 200) gemäß einem der Ansprüche 1 bis 5, die ferner einen Äquivalentrauschberechner (260) zum Berechnen des Äquivalentrauschwerts (262) als eine Summe eines thermischen Rauschwerts (266) und eines Durchschnitts einer Anzahl von Symbolrauschwerten (272) aufweist, wobei die Symbolrauschwerte (272) einen stochastischen Fehler beschreiben, der durch ein fehlerhaftes Decodieren von OFDM-Symbolen (114; $Y_{k,1}$) eingebracht ist.

7. Die Vorrichtung (100; 200) gemäß Anspruch 6, die ferner einen Symbolrauschwertberechner (280) aufweist, wobei der Symbolrauschwertberechner (280) wirksam ist, um Symbolvarianzen ($\delta_i$, 276) basierend auf Symbolwahrscheinlichkeiten ($P(X_i) = A_m$, 278) zu berechnen, die durch den Decodierer (224, 230, 232) geliefert werden, und um die Symbolrauschwerte (272) basierend auf den Symbolvarianzen ($\delta_i$, 276) abzuleiten.

8. Die Vorrichtung (100; 200) gemäß Anspruch 7, bei der der Symbolrauschwertberechner (280) ferner angepasst ist, um die Symbolrauschwerte ($\delta_i$, 276) für OFDM-Symbole ($P_\zeta$) bei Pilotpositionen auf Null zu setzen.

9. Die Vorrichtung (100; 200) gemäß Anspruch 7 oder Anspruch 8, bei der der Symbolrauschwertberechner (280) angepasst ist, um die Symbolrauschwerte als Produkte der Symbolvarianzen ($\delta_i$, 276) und entsprechender Kanalübertragungsleistungswerte ($\sigma_{Hi}^2$, 274) zu berechnen, wobei die Kanalübertragungsleistungswerte ($\sigma_{Hi}^2$, 274) einen Betrag einer Kanalübertragungsfunktion beschreiben, die für die Übertragung des Modulationssymbols relevant ist, für das der Symbolrauschwert (272) berechnet ist.

10. Die Vorrichtung (100; 200) gemäß Anspruch 9, die ferner einen Kanalübertragungsleistungswertberechner (281) zum Berechnen des Kanalübertragungsleistungswerts ($\sigma_{Hi}^2$, 274) für ein OFDM-Symbol (114; $Y_{k,1}$) durch ein Auswerten eines Quotienten einer empfangenen Symbolleistung und einer gesendeten Symbolleistung für das jeweilige ODFM-Symbol aufweist.

11. Die Vorrichtung (100; 200) gemäß Anspruch 10, bei der der Kanalübertragungsleistungsberechner (281) angepasst ist, um die Empfangssignalleistung durch Subtrahieren eines thermischen Rauschleistungswerts (266) von einer Empfangssignalleistung für die OFDM-Symbole ($Y_{k,1}$) zu berechnen.

12. Die Vorrichtung (100; 200) gemäß einem der Ansprüche 1 bis 11, bei der der Kanalschätzer (150; 250) angepasst ist, um die Kanalwerte an den Datenpositionen basierend auf einem wirksamen Signal-zu-Rausch-Verhältnis zu berechnen, das unter Berücksichtigung einer fehlerhaften OFDM-Symboldecodierung durch den Decodierer (126; 224, 230, 232) berechnet wird und das geringer als ein theoretischer Signal-zu-Rausch-Wert ist, wobei der theoretische Signal-zu-Rausch-Wert als ein Verhältnis einer Symbolenergie und eines thermischen Rauschleistungswerts (266) definiert ist.

13. Die Vorrichtung (100; 200) gemäß einem der Ansprüche 1 bis 11, bei der der Kanalschätzer (150; 250) angepasst ist, um die Kanalwerte (158; 251) an den Datenpositionen basierend auf einem wirksamen Signal-zu-Rausch-Verhältnis zu berechnen, das unter Berücksichtigung einer fehlerhaften OFDM-Symboldecodierung durch den Decodierer (126; 224, 230, 232) berechnet wird und das geringer als ein Soft-Symbol-Signal-zu-Rausch-Verhältnis ist, wobei das Soft-Symbol-Signal-zu-Rausch-Verhältnis als ein Quotient zwischen einem Erwartungswert von quadrierten Amplituden geschätzter Datensymbole (146; 248), die durch den Umabbilder (138; 246) geliefert werden, und einem thermischen Rauschleistungswert (266) definiert ist.

14. Die Vorrichtung (100; 200) gemäß einem der Ansprüche 1 bis 13, bei der der Kanalschätzer (150; 250) angepasst ist, um die Kanalwerte (158; 251) an den Datenpositionen basierend auf einem wirksamen Signal-zu-Rausch-Verhältnis zu berechnen, wobei der Kanalschätzer (150, 250) ferner angepasst ist, um das wirksame Signal-zu-Rausch-Verhältnis als einen Quotienten eines Erwartungswerts von quadrierten Amplituden geschätzter Datensymbole (146; 248), die durch den Umabbilder (138; 246) geliefert werden, und dem Äquivalentrauschwert (154; 262) zu berechnen.

15. Die Vorrichtung (100; 200) gemäß einem der Ansprüche 1 bis 14, bei der Kanalwertbereitsteller (118; 210) und der Kanalschätzer (150; 250) entworfen sind, um zumindest eine Komponente einer Berechnungshardware zum Berechnen der Kanalwerte an den Pilotpositionen und der Kanalwerte an den Datenpositionen gemeinschaftlich zu verwenden.

**16.** Die Vorrichtung (100; 200) gemäß einem der Ansprüche 1 bis 15, die ferner einen Mittelwertbildner zum Mitteln von Äquivalentrauschwerten (154; 262) über einer Mehrzahl von Datenpositionen aufweist, um einen gemittelten Äquivalentrauschwert zu erhalten, wobei der Kanalschätzer (150; 250) ferner angepasst ist, um die Kanalwerte (158; 251) an einer Mehrzahl von Datenpositionen unter Verwendung des gemittelten Äquivalentrauschwerts zu berechnen.

**17.** Die Vorrichtung (100; 200) gemäß einem der Ansprüche 1 bis 16, bei der der Kanalschätzer (150; 250) angepasst ist, um die Kanalwerte (158; 251) durch ein Durchführen einer ersten linearen Filteroperation der empfangenden OFDM-Symbole (114; $Y_{k,1}$, $P_\zeta$) in eine erste Richtung, um einmal gefilterte Werte zu erhalten, und einer zweiten linearen Filteroperation der einmal gefilterten Werte, um die Kanalwerte über einer Region zu erhalten, die sich zeitlich und frequenzmäßig erstreckt, zu berechnen,
wobei die erste Richtung eine Frequenzrichtung ist und die zweite Richtung eine Zeitrichtung ist, oder die erste Richtung die Zeitrichtung ist und die zweite Richtung die Frequenzrichtung ist.

**18.** Die Vorrichtung (100; 200) gemäß Anspruch 17, bei der die Filteroperation ein Anwenden eines Filters einer ersten Filterordnung M1 und ein Verwenden eines ersten Teilrauschleistungswerts N1 aufweist, und wobei die zweite Filteroperation ein Anwenden eines Filters einer zweiten Filterordnung M2 und ein Verwenden eines zweiten Teilrauschleistungswerts N2 aufweist,

wobei der erste Teilrauschleistungswert N1 berechnet wird als $\dfrac{\sigma_{N'}^{2}}{\alpha}$ und der zweite Teilrauschleistungswert N2

berechnet wird als $= \dfrac{\sigma_{N'}^{2}}{\beta}$ , wobei $\alpha \geq 1$, $\beta \geq 1$ und $0.5\sqrt{(M1+M2)/2} \leq \alpha, \beta \leq 2\sqrt{(M1+M2)/2}$ .

**19.** Verfahren zum Schätzen eines Kanals für ein OFDM-Übertragungssystem, wobei das Verfahren folgende Schritte aufweist:

Empfangen (110) eines OFDM-Symbols (114; $Y_{k,l}$, $P_\zeta$) mit Pilottönen an bestimmten Pilotpositionen innerhalb des OFDM-Symbols;
Schätzen (118; 210) von Kanalwerten an den Pilotpositionen unter Verwendung der empfangenen OFDM-Symbole (114; $Y_{k,l}$, $P_\zeta$) und einer Kenntnis der Pilottöne;
Interpolieren (118; 210) der Kanalwerte, um interpolierte Kanalwerte an Datenpositionen zu erhalten, die sich von Pilotpositionen unterscheiden;
Decodieren (126; 224, 230, 232) der empfangenen OFDM-Symbole (114; $Y_{k,l}$, $P_\zeta$) unter Verwendung der Kanalwerte (122) an den Datenpositionen, um decodierte Datenwerte (134; 278) zu erhalten;
Umabbilden (138; 242, 246) der decodierten Datenwerte (134; 278) zu umabgebildeten Datensymbolschätzwerten (146; 248); und
Schätzen (150; 250) von Kanalwerten (158; 251) an den Datenpositionen unter Verwendung des empfangenen OFDM-Symbols (114; $Y_{k,l}$, $P_\zeta$) und der umabgebildeten Datensymbolschätzwerte (146; 248), um verbesserte Kanalwerte (158; 251) an den Datenpositionen zu erhalten, durch Berechnen der Kanalwerte (158; 251) an den Datenpositionen basierend auf einem Äquivalentrauschwert (154; 262), der eine Rauschenergie darstellt, die höher als eine Rauschenergie des thermischen Rauschens ist,

wobei der Äquivalentrauschwert eine Überlagerung des thermischen Rauschens und von Symbolunsicherheiten ist,
wobei die Kanalwerte an den Datenpositionen durch Anwenden einer linearen Filteroperation auf die empfangenen OFDM-Symbole berechnet werden, und
wobei die lineare Filteroperation von dem Äquivalentrauschwert abhängig ist.

**20.** Computerprogramm mit einem Programmcode zum Durchführen des Verfahrens gemäß Anspruch 19, wenn das Computerprogramm auf einem Computer ausgeführt wird.

**Revendications**

**1.** Appareil (100; 200) pour estimer un canal pour un système de transmission OFDM, comprenant:

un récepteur (110) destiné à recevoir un symbole OFDM (114; $Y_{k,l}$, $P_\zeta$) présentant des sons pilotes à certaines positions pilotes dans le symbole OFDM;

un fournisseur de valeurs de canal (118; 210) destiné à estimer les valeurs de canal aux positions pilotes à l'aide du symbole OFDM reçu et de la connaissance sur les sons pilotes, et à interpoler les valeurs de canal, pour obtenir des valeurs de canal interpolées à des positions de données différentes des positions pilotes;

un décodeur (126; 224, 230, 232) destiné à décoder les symboles OFDM à l'aide des valeurs de canal aux positions de données, pour obtenir des valeurs de données décodées;

un remappeur (138; 242, 246) destiné à remapper les valeurs de données décodées (134), pour obtenir des estimations de symbole de données remappées (146; 248); et

un estimateur de canal (150; 250) destiné à estimer les valeurs de canal aux positions de données à l'aide du symbole OFDM reçu (114; $Y_{k,l}$, $P_\zeta$) et des estimations de symbole de données remappées (146; 248), pour obtenir des valeurs de canal améliorées (158; 251) aux positions de données,

dans lequel l'estimateur de canal (150; 250) est opérationnel pour calculer les valeurs de canal (158; 251) aux positions de données sur base d'une valeur de bruit équivalent (154; 262) représentant une énergie de bruit qui est supérieure à une énergie de bruit du bruit thermique (266),

dans lequel la valeur de bruit équivalent est une superposition du bruit thermique et des incertitudes de symbole,

dans lequel l'estimateur de canal (150; 250) destiné à estimer les valeurs de canal est adapté pour calculer les valeurs de canal (158; 251) aux positions de données en appliquant une opération de filtre linéaire aux symboles OFDM reçus (114; $Y_{k,l}$, $P_\zeta$), où l'opération de filtre linéaire est adaptée en fonction de la valeur de bruit équivalent.

2. Appareil (100; 200) selon la revendication 1, dans lequel l'estimateur de canal (150; 250) est opérationnel pour calculer les valeurs de canal (158; 251) aux positions de données à l'aide d'un rapport entre une énergie de bruit équivalent (154; 262), qui est supérieure à l'énergie de bruit du bruit thermique, et une mesure d'énergie (284) des estimations de symbole de données remappées (146; 248).

3. Appareil (100; 200) selon la revendication 1 ou 2, dans lequel la valeur de bruit équivalent (154; 262) représente une énergie de bruit qui est inférieure à cinq fois une énergie de bruit du bruit thermique.

4. Appareil (100; 200) selon l'une des revendications 1 à 3, dans lequel la valeur de bruit équivalent (154; 262) est calculée de manière à décrire des erreurs de décodage stochastiques lors de l'obtention de valeurs de données décodées (134; 278) à partir des symboles OFDM (114; $Y_{k,1}$).

5. Appareil (100; 200) selon l'une des revendications 1 à 4,

dans lequel l'opération de filtre linéaire est décrite par un produit de matrice de corrélation croisée de signal de réception de canal et de l'inverse d'une matrice d'auto-corrélation de signal de réception, où les éléments diagonaux de la matrice d'auto-corrélation de signal de réception sont fonction de la valeur de bruit équivalent (154; 262).

6. Appareil (100; 200) selon l'une des revendications 1 à 5, comprenant par ailleurs un calculateur de bruit équivalent (260) destiné à calculer la valeur de bruit équivalent (262) comme somme d'une valeur de bruit thermique (266) et moyenne d'un nombre de valeurs de bruit de symbole (272), les valeurs de bruit de symbole (272) décrivant une erreur stochastistique introduite par un décodage erroné de symboles OFDM (114; $Y_{k,1}$).

7. Appareil (100; 200) selon la revendication 6, comprenant par ailleurs un calculateur de valeur de bruit de symbole (280), le calculateur de valeur de bruit de symbole (280) étant opérationnel pour calculer les variances de symbole ($\delta i$, 276) sur base des probabilités de symbole ($P(Xi) = A_m$, 278) fournies par le décodeur (224, 230, 232) et pour dériver les valeurs de bruit de symbole (272) sur base des variances de symbole ($\delta_i$, 276).

8. Appareil (100; 200) selon la revendication 7, dans lequel le calculateur de bruit de symbole (280) est par ailleurs adapté pour mettre à zéro les valeurs de bruit de symbole ($\delta_i$, 276) pour les symboles OFDM ($P_\zeta$) en positions pilotes.

9. Appareil (100; 200) selon la revendication 7 ou la revendication 8,

dans lequel le calculateur de bruit de symbole (280) est adapté pour calculer les valeurs de bruit de symbole comme produits des variances de symbole ($\delta_i$, 276) et des valeurs de puissance de transfert de canal correspondantes ($\sigma_{Hi}^2$, 274), les valeurs de puissance de transfert de canal ($\sigma_{Hi}^2$, 274) décrivant une amplitude d'une fonction de transfert de canal pertinente pour la transmission du symbole de modulation pour lequel est calculé la valeur de bruit de symbole (272).

**10.** Appareil (100; 200) selon la revendication 9, comprenant par ailleurs un calculateur de valeur de puissance de transfert de canal (281) destiné à calculer la valeur de puissance de transfert de canal ($\sigma_{Hi}^2$, 274) pour un symbole OFDM (114, $Y_{k,1}$) en évaluant un quotient d'une puissance de symbole reçu et d'une puissance de symbole transmis pour le symbole OFDM respectif.

**11.** Appareil (100; 200) selon la revendication 10, dans lequel le calculateur de valeur de puissance de transfert de canal (281) est adapté pour calculer la puissance de symbole reçu en soustrayant une valeur de puissance de bruit thermique (266) d'une puissance de signal reçu pour les symboles OFDM ($Y_{k,1}$).

**12.** Appareil (100; 200) selon l'une des revendications 1 à 11, dans lequel l'estimateur de canal (150; 250) est adapté pour calculer les valeurs de canal aux positions de données sur base d'un rapport signal/bruit effectif qui est calculé en tenant compte du décodage de symbole OFDM erroné par le décodeur (126; 224, 230, 232), et qui est inférieur à une valeur signal/bruit théorique, la valeur signal/bruit théorique étant définie comme rapport entre une valeur d'énergie de symbole et une valeur de puissance de bruit thermique (266).

**13.** Appareil (100; 200) selon l'une des revendications 1 à 11, dans lequel l'estimateur de canal (150; 250) est adapté pour calculer les valeurs de canal (158; 251) aux positions de données sur base d'un rapport signal/bruit effectif qui est calculé en tenant compte du décodage de symbole OFDM erroné par le décodeur (126; 224, 230, 232), et qui est inférieur à un rapport signal/bruit de symbole doux, le rapport signal/bruit de symbole doux étant défini comme quotient entre une valeur d'attente d'amplitudes élevées au carré de symboles de données estimées (146; 248) fournis par le moyen de remappage (138; 246) et une valeur de puissance de bruit thermique (266).

**14.** Appareil (100; 200) selon l'une des revendications 1 à 13, dans lequel l'estimateur de canal (150; 250) est adapté pour calculer les valeurs de canal (158; 251) aux positions de données sur base d'un rapport signal/bruit effectif, dans lequel l'estimateur de canal (150; 250} est par ailleurs adapté pour calculer le rapport signal/bruit effectif comme quotient entre une valeur d'attente d'amplitudes élevées au carré de symboles de données estimées (146; 248) fournis par le moyen de remappage {138; 246) et la valeur de bruit équivalent (154; 262).

**15.** Appareil (100; 200) selon l'une des revendications 1 à 14, dans lequel le fournisseur de valeur de canal (118; 210) et l'estimateur de canal (150; 250) sont conçus pour partager au moins un composant d'un matériel de calcul pour calculer les valeurs de canal aux positions pilotes et les valeurs de canal aux positions de données.

**16.** Appareil (100; 200) selon l'une des revendications 1 à 15, comprenant par ailleurs un moyen d'établissement de moyenne destiné à établir la moyenne des valeurs de bruit équivalent (154; 262) sur une pluralité de positions de données, pour obtenir une valeur de bruit équivalent moyenne, dans lequel l'estimateur de canal (150; 250) est par ailleurs adapté pour calculer les valeurs de canal (158; 251) à une pluralité de positions de données à l'aide de la valeur de bruit équivalent moyenne.

**17.** Appareil (100; 200) selon l'une des revendications 1 à 16, dans lequel l'estimateur de canal (150; 250) est adapté pour calculer les valeurs de canal (158; 251) en effectuant une première opération de filtre linéaire des symboles OFDM reçus (114; $Y_{k,1}$, $P_\zeta$) dans une première direction, pour obtenir des valeurs filtrées une seule fois, et une deuxième opération de filtre linéaire des valeurs filtrées une seule fois, pour obtenir les valeurs de canal sur une région étendue dans le temps et en fréquence,
dans lequel la première direction est une direction de fréquence et une deuxième direction est une direction de temps, ou la première direction est la direction de temps et la deuxième direction est la direction de fréquence.

**18.** Appareil (100; 200) selon la revendication 17, dans lequel la première opération de filtre comprend le fait d'appliquer un filtre d'un premier ordre de filtre M1 et à l'aide d'une première valeur de puissance de bruit partielle N1, et dans lequel la deuxième opération de filtre comprend le fait d'appliquer un filtre d'un deuxième ordre de filtre M2 et à l'aide d'une deuxième valeur de puissance de bruit partielle N2,

dans lequel la première valeur de puissance de bruit partielle N1 est calculée comme $N1 = \dfrac{\sigma_{N'}^2}{\alpha}$ et la deuxième

second valeur de puissance de bruit partielle N2 est calculée comme $N2 = \dfrac{\sigma_{N'}^2}{\beta}$, avec $\alpha \geq 1$, $\beta \geq 1$ et

$$0.5\sqrt{(M1+M2)/2} \le \alpha, \beta \le 2\sqrt{(M1+M2)/2}.$$

19. Procédé pour estimer un canal pour un système de transmission OFDM, le procédé comprenant les étapes consistant à:

recevoir (110) un symbole OFDM (114; $Y_{k,1}$, $P_\zeta$) présentant des sons pilotes à certaines positions pilotes dans le symbole OFDM;

estimer (118; 210) les valeurs de canal aux positions pilotes à l'aide du symbole OFDM reçu (114; $Y_{k,1}$, $P_\zeta$) et de la connaissance sur les sons pilotes,

interpoler (118; 210) les valeurs de canal, pour obtenir des valeurs de canal interpolées à des positions de données différentes des positions pilotes;

décoder (126; 224, 230, 232) les symboles OFDM reçus (114; $Y_{k,1}$, $P_\zeta$) à l'aide des valeurs de canal (122) aux positions de données, pour obtenir des valeurs de données décodées (134; 278);

remapper (138; 242, 246) les valeurs de données décodées (134; 278), pour obtenir des estimations de symbole de données remappées (146; 248); et

estimer (150; 250) les valeurs de canal (158; 251) aux positions de données à l'aide du symbole OFDM reçu (114; $Y_{k,1}$, $P_\zeta$) et des estimations de symbole de données remappées (146; 248), pour obtenir des valeurs de canal améliorées (158; 251) aux positions de données en calculant les valeurs de canal (158; 251) aux positions de données sur base d'une valeur de bruit équivalent (154; 262) représentant une énergie de bruit qui est supérieure à une énergie de bruit du bruit thermique,

dans lequel la valeur de bruit équivalent est une superposition du bruit thermique et des incertitudes de symbole, dans lequel les valeurs de canal aux positions de données sont calculées en appliquant une opération de filtre linéaire aux symboles OFDM reçus, et
où l'opération de filtre linéaire est fonction de la valeur de bruit équivalent.

20. Programme d'ordinateur ayant un code de programme pour réaliser le procédé selon la revendication 19 lorsque le programme d'ordinateur est exécuté sur un ordinateur.

28

FIG. 1a

EP 1 748 610 B1

FIG. 1b

FIG. 2a

First Channel Estimation

Pilot Symbols $\tilde{X}_{k,n}$

$Y_{k,n}$

Received signal

DEMUX

$Y^{(P)}_{k,n}$

⊗

Initial Channel Estimation via Interpolation

$\hat{H}_{k,n}$

$Y^{(S)}_{k,n}$

Iterative Channel Estimation

Soft Symbols $\hat{X}_{k,n}$

FIG. 2b

EP 1 748 610 B1

frequency

FIG. 3

time

Pilot

Soft decision

Desired channel estimate

Iterative Channel Estimation

Pilot Symbols $\tilde{X}_{k,n}$

$Y_{k,n}$

Received signal

DEMUX $Y^{(P)}_{k,n}$ ⊗ Initial Channel Estimation via Interpolation

$\hat{H}_{k,n}$

$Y^{(S)}_{k,n}$ ⊗ Iterative Channel Estimation

Soft Symbols $\hat{X}_{k,n}$

FIG. 4

FIG. 5

EP 1 748 610 B1

FIG. 6

EP 1 748 610 B1

FIG. 7
Prior Art

EP 1 748 610 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050135324 A1

### Non-patent literature cited in the description

- **W. Yang et al.** An improved channel quality estimation technique for OFDM system. *5th International Symposium on Wireless and Personal Multimedia Communications,* 27 October 2002, vol. 3
- **F. SANZI ; S. JELTING ; J. SPEIDEL.** A comparative study of iterative channel estimators for mobile OFDM systems. *IEEE Transactions on Wireless Communications,* September 2003, vol. 5 (2), 849-859
- **M. TÜCHLER ; R. OTNES ; A. SCHMIDBAUER.** Performance of Soft Iterative Estimation in Turbo Equalization. *IEEE International Conference on Communications (ICC,* May 2002, 1858-1862
- Digital Communication Receivers, Synchronization. **H. MEYR ; M. MOENECLAEY ; S. FECHTEL.** Channel Estimation and Signal Processing. Wiley & Sons, 1998, vol. 2
- **J. WEHINGER ; C. MECKLENBRÄUKER ; R. MÜLLER ; T. ZEMEN ; M. LONCAR.** On Channel Estimators for Iterative CDMA Multiuser Receivers in Flat Rayleigh Fading. *IEEE International Conference on Communications (ICC,* June 2004, vol. 5, 2497-2501
- **T. ZEMEN ; M. LONCAR ; J. WEHINGER ; C. MECKLENBRAÜKER ; R. MÜLLER.** Improved Channel Estimation for Iterative Receivers. *IEEE Global Telecommunications Conference (GLOBECOM,* vol. 1, 257-261
- **T. ZEMEN ; J. WEHINGER ; C. MECKLENBRAÜKER ; R. MÜLLER.** Iterative detection and channel estimation for MC-CDMA. *IEEE International Conference on Communications (ICC,* vol. 5, 3462-3466
- **L.M. DAVIS ; I.B. COLLINGS ; P. HOEHER.** Joint MAP equalization and channel estimation for frequency-selective and frequency-flat fast-fading channels. *IEEE Transactions on Communications,* December 2001, vol. 49 (12), 2106-2114
- **G. AUER ; A. DAMMANN ; S. SAND.** Comparison of Low Complexity OFDM Channel Estimation Techniques. *Proc. of Int. OFDM Workshop,* 2003
- **L. SCHARF.** Statistical Signal Processing. Addison Wesley, 1991
- **G. AUER.** Channel Estimation for OFDM Systems with Multiple Transmit Antennas by Filtering in Time and Frequency. *VTC03fall,* October 2003
- **O. EDFORS ; M. SANDELL ; J.-J. VAN DE BEEK ; S.K. WILSON ; P.O. BÖRJESSON.** OFDM Channel Estimation by singular value decomposition. *IEEE Trans. Communications,* 1998, vol. 46, 931-939